Europäisches Patentamt

European Patent Office

Office européen des brevets

(11) Publication number: **0 296 496**
**A2**

## (12) EUROPEAN PATENT APPLICATION

(21) Application number: **88109646.5**

(22) Date of filing: **16.06.88**

(51) Int. Cl.⁴: **A23L 1/31**

(30) Priority: **23.06.87 US 66733**

(43) Date of publication of application:
**28.12.88 Bulletin 88/52**

(84) Designated Contracting States:
**CH DE FR GB IT LI NL**

(71) Applicant: **DESIGN TECHNOLOGY CORPORATION**
**5 Suburban Park Drive**
**Billerica Massachusetts 01821(US)**

(72) Inventor: **McInnes, John c/o Design Techn.Corp.**
**5 Suburban Park Drive**
**Billerica, Massachusetts 01821(US)**
Inventor: **Robinson, Hugh c/o Design Techn.Corp.**
**5 Suburban Park Drive**
**Billerica, Massachusetts 01821(US)**
Inventor: **Wisely, Thomas c/o Design Techn.Corp.**
**5 Suburban Park Drive**
**Billerica, Massachusetts 01821(US)**
Inventor: **Doan, Cong c/o Design Techn.Corp.**
**5 Suburban Park Drive**
**Billerica, Massachusetts 01821(US)**
Inventor: **Kordis, Kevin c/o Design Techn.Corp.**
**5 Suburban Park Drive**
**Billerica, Massachusetts 01821(US)**
Inventor: **Menzin, Marvin c/o Design Techn.Corp.**
**5 Suburban Park Drive**
**Billerica, Massachusetts 01821(US)**
Inventor: **Agranat, Edward c/o Design Techn.Corp.**
**5 Suburban Park Drive**
**Billerica, Massachusetts 01821(US)**

(74) Representative: **Strasse, Joachim, Dipl.-Ing. et al**
**Strasse und Stoffregen European Patent Attorneys Zweibrückenstrasse 17**
**D-8000 München 2(DE)**

(54) **Method and apparatus for automatic handling and preparation of sandwiches.**

(57) An automatic hamburger outlet system in which a sales person enters an order on one of several registers and, within a bit more than one minute, a custom cooked-to-order hamburger is delivered

automatically. Under the control of a computer, each hamburger is prepared in accordance with the instructions entered on the register. For example, the hamburgers, which may be of various sizes, may be cooked rare, medium or well-done, and topped automatically with the particular condiments selected by the customer. The carton in which the hamburger is delivered is printed with the particular customer specifications for that hamburger.

The system makes advantageous use of labor by permitting necessary tasks to be performed in advance during slack periods. For example, the morning period prior to the noon rush may be used to fill the storage containers of the automatic food preparation system. The system can then operate for one and one-half hours during the noon rush without further attention other than by an attendant to insure proper operation of the system.

# METHOD AND APPARATUS FOR AUTOMATIC HANDLING AND PREPARATION OF SANDWICHES

## Background of the Invention

This invention relates to the rapid and automatic preparation of hamburgers by a system that combines storage of the necessary ingredients, such as rolls, meat patties, condiments, and cartons, and the automatic custom preparation and delivery of the sandwich.

## Brief Description of the Related Art

In the so-called fast-food industry, the profitability of a food outlet is highly dependent upon the speed with which the food can be delivered and the cost of labor in preparing and packaging the food. There are other factors that can enhance the sales, but these must be done in a manner efficient enough to maintain the necessary profitability. It has been the more usual practice to standardize the food preparation and thereby simplify and lower the cost of preparation. For example, a hamburger outlet may prepare all hamburgers in the same way and spread each hamburger with the same kind of condiments. Such standardization has been adopted in many instances because of the higher costs of custom preparation. Individual devices have been provided for automatic operation of certain steps in the preparation of hamburgers on rolls, but these have not been combined in an automatic system that permits wide customer choices without slowing the operation or increasing the costs of preparation.

## Summary of the Invention

The present invention is applicable in various respects to different sandwich combinations, but is described as embodied in an automatic hamburger outlet system in which a sales person enters an order on one of several registers and, within a bit more than one minute, a custom cooked-to-order hamburger is delivered automatically to a collection area or to a tray adjacent the register. Each hamburger is prepared in accordance with the instructions entered on the register. For example, the hamburger may be cooked rare, medium or well-done, and topped with the particular condiments selected by the customer. Moreover, the carton in which the hamburger is delivered is printed with the particular customer specifications for that hamburger and with a code indicating the particular customer order. A conveyor automatically delivers each hamburger carton to a designated area or to a collection tray in the vicinity of the particular register on which the order was entered. Thus, each sales person, working at a particular register, need only keep track of the cartons delivered to the associated collection tray. Each order is assigned a unique code by the register when the order is entered and this code will appear on the customer's receipt and also on the hamburger carton when it is delivered to the register.

The system makes advantageous use of labor by permitting necessary tasks to be performed in advance during slack periods. For example, the morning period prior to the noon rush may be used to fill the storage containers of the automatic food preparation system. The system can then operate for one and one-half hours during the noon rush without further attention other than by an attendant to insure proper operation of the system. The various advantages will be apparent from consideration of the more detailed description of the specific embodiments of the invention.

## Brief Description of the Drawing

Figure 1 is a diagrammatic view of an automated hamburger preparation and delivery system embodying the invention;

Figure 2 is a front view of the food preparation and storage portion of Figure 1;

Figure 3 is a top view of the system shown in Figure 2;

Figure 4 is an end view of the system of Figure 2;

Figure 5 illustrates a method for packing and storing buns;

Figure 6 illustrates a tray with arcuate bottom portions for holding the hamburger buns;

Figure 7 illustrates a method for storing and handling frozen hamburger patties for more efficient loading of the system;

Figure 8 illustrates a system for storing and grilling hamburger buns;

Figure 9 shows an automatic system for dispensing and spreading selected condiments onto the hamburger roll;

Figure 10 shows an alternate apparatus for selectively dispensing condiments and spreading them onto the hamburger bun;

Figure 11 shows an arrangement for dispensing and distributing additional selected condiments;

Figure 12 shows a hopper arrangement for dispensing chopped lettuce or onion;

Figure 13 is shows the hopper of Figure 12 in position after the release of the chopped onion or lettuce;

Figure 14 illustrates an alternative dispenser for chopped onion or lettuce making use of a bucket conveyor;

Figure 15 shows another device for dispensing chopped vegetables in which the excess portion of the chopped vegetable is removed from each bucket of a conveyor by a doctor blade;

Figure 16 shows a dispenser for chopped vegetables in which the vegetables are held in an inverted vacuum cup, the excess sheared off, and the measured amount delivered to the hamburger bun;

Figure 17 shows a system for delivering a measured amount of diced vegetables to a hamburger bun by means of an auger feed driven by a stepping motor custom controlled for delivery of the pre-selected amount;

Figure 18 shows a magazine for delivering bacon slices to a hamburger pattie;

Figure 19 shows an apparatus for delivering a predetermined amount of sliced pickle to a hamburger bun;

Figure 20 is a partial horizontal section through Figure 19 showing the shape of the slicer knives;

Figure 21 shows a storage freezer for hamburger patties and mechanism for delivering the individual patties to a broiler;

Figure 22 shows a hamburger patty storage and single-file broiler system for broiling the patties and delivering them to the buns;

Figure 23 shows a vertical broiler feed system for use in the system of Figure 1;

Figure 24 shows a self-cleaning broiler in which the patties are transported vertically by a wire grid belt which returns outside the heat source and within the oven;

Figure 25 is a partial end view of the broiler of Figure 24;

Figure 26 shows a broiler with controlled heat-deflecting vanes that are computer-controlled to provide variable degrees of cooking;

Figure 27 shows one section of a broiler in which the patties move horizontally between two arrays of gas nozzles, each vertical row of which is individually controlled in accordance with the cooking instructions;

Figure 28 is a front view of a broiler in which multiple rows of hamburger patties travel horizontally while held in place by wire grid belts;

Figure 29 is a top view of the broiler of Figure 28;

Figure 30 is a partial side view of the broiler of Figure 28 showing channels for collecting grease;

Figure 31 is a front view of a broiler in which each row of hamburger patties is transported by a separate grid belt;

Figure 32 is a top view of the broiler of Figure 31;

Figure 33 is a partial end view of the broiler of Figure 31 showing the grease-collecting channels;

Figure 34 shows a portion of a broiler in which the meat patties travel through the broiler at an angle from the horizontal with a common collector for the grease drippings;

Figure 35 is an end view of Figure 34;

Figure 36 shows a three section broiler in which each section has two wire grid belts that carry the patties and in which each section is programmed to cook the patties to a predetermined degree of doneness;

Figure 37 shows a feed mechanism for feeding individual frozen hamburger patties from a stack;

Figure 38 illustrates a method of freezing and packing hamburger patties for efficient loading into an automatic broiler ;

Figure 39 shows a broiler system making use of hamburger patties packed in the manner illustrated by Figure 38;

Figure 40 shows a broiler in which the hamburger patties move vertically through the broiler while being supported by a movable support that is computer-operated to control the cooking time for each patty;

Figure 41 shows a broiler making use of a staggered wire mesh conveyor;

Figure 42 shows a broiler system in which the meat patties are supported by wire grippers;

Figure 43 shows a side view of the grippers used in Figure 42;

Figure 44 shows a broiler in which a single conveyor is provided with channels for support and grease collection and with fixed gratings to hold the patties in position during broiling;

Figure 45 shows an in-line broiler using wire grid patty carriers;

Figure 46 is an end view of the broiler of Figure 45;

Figure 47 shows a broiler in which the meat patties follow an upward path along a steep incline;

Figure 48 shows a broiler in which the patties follow a downward path supported by channel carried by a wire grid belt;

Figure 49 shows a broiler using heated ceramic plates in contact with the meat patties;

Figure 50 is an end view of the broiler of Figure 49;

Figure 51 illustrates a ceramic plate broiler in which a ceramic tile holds only a single patty;

Figure 52 is a diagrammatic representation of a broiler in which cooking blocks are individually supplied with energy dependent upon the cooking instructions for each meat patty;

Figure 53 represents an improved carton for holding a hamburger sandwich;

Figure 54 shows the carton of Figure 53 in closed position;

Figure 55 illustrates a method of packaging and shipping hamburger patties;

Figure 56 illustrates the method of using the shipping cartons and hamburger packaging in the retail hamburger processor;

Figure 57 shows an alternative method of forming and shipping ground meat for use in hamburger patties.

Figure 58 shows another arrangement for storing and dispensing a shredded product such as lettuce; and

Figure 59 shows another apparatus for cooking a meat patty automatically to custom specifications.

Description of the Preferred Embodiments

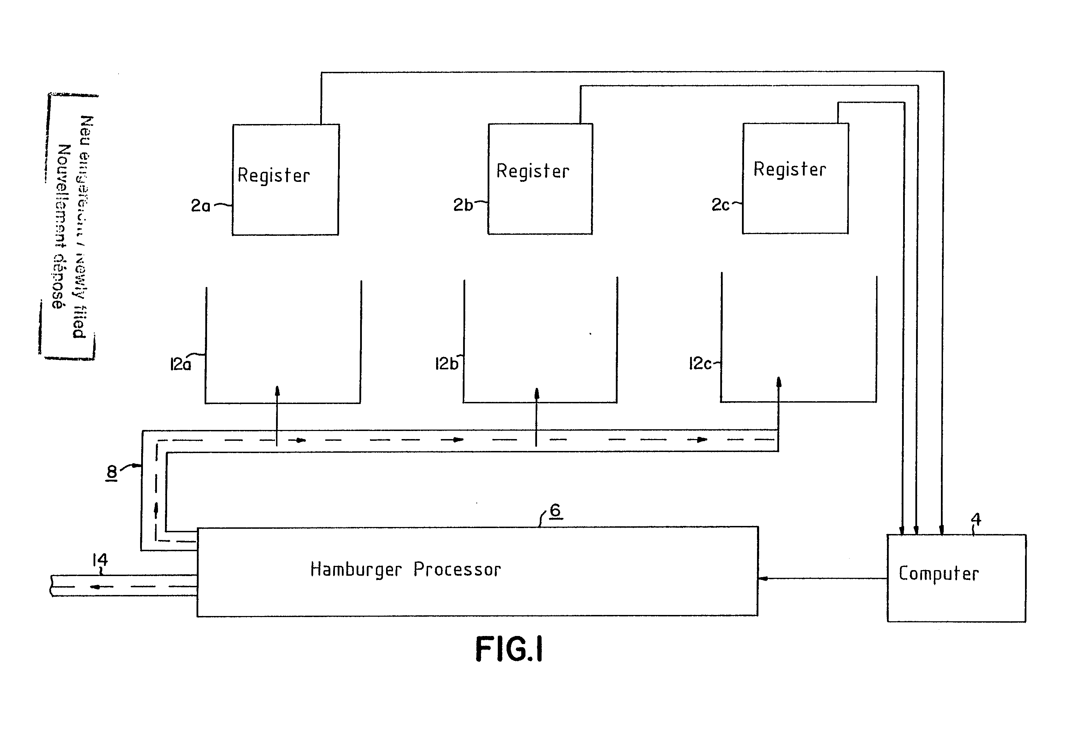

Figure 1 illustrates diagrammatically the overall operation of the system. Orders are entered by the sales persons at the registers 2a, 2b and 2c. Each time an order is entered, the sales person specifies the cooking instructions, the size of the hamburger patty, and the particular condiments that are to be placed in the bun. This information, along with the order and station codes, is transmitted to a computer 4 that controls the operation of the hamburger processor and delivery system, generally indicated at 6. A printing mechanism under the control of the computer 4 prints the carton with the particular specifications for degree of doneness, adornments, and station and order codes. The computer causes the crown of a bun to be removed from storage, grilled, placed in the carton, printed with the appropriate information, and moved successively through the stages of the preparation system in which the selected kinds and amounts of condiments are automatically applied to the bun crown. The finished sandwich may be delivered to an area near the register at which the order was placed or it may be delivered to a special area where an entire order is collected under the control of the computer 4.

At the same time the bun crown is removed from storage, the computer starts a hamburger patty through the broiler and cooks it in one minute or less to the specified degree of doneness. The "upside down" preparation of the bun saves processing time because it permits the condiments to be added to the bun during the time the hamburger is being cooked. Hamburgers may be cooked by broiling or grilling by direct contact with a hot surface. Generally all such methods are referred to herein as "broiling". When the particular crown reaches the broiler station, the meat patty is placed on the crown which continues along the conveyor system to receive other ingredients, such as cheese. While the meat patty is broiling, the computer also removes a bottom portion of the roll from storage, preheats it in a microwave region, and toasts it, and when the patty and crown arrive at this station, the bottom bun portion is placed on top of the assembly. The carton is then closed automatically and placed on a conveyor, generally indicated at 8. The conveyor 8 returns the carton to a collection bin 12a, 12b or 12c in the the area of the particular register where the order was placed or to an order-collection area. If the order was placed from a drive-in window, a conveyor belt, generally indicated at 14, receives the carton and transports it to the drive-in window area.

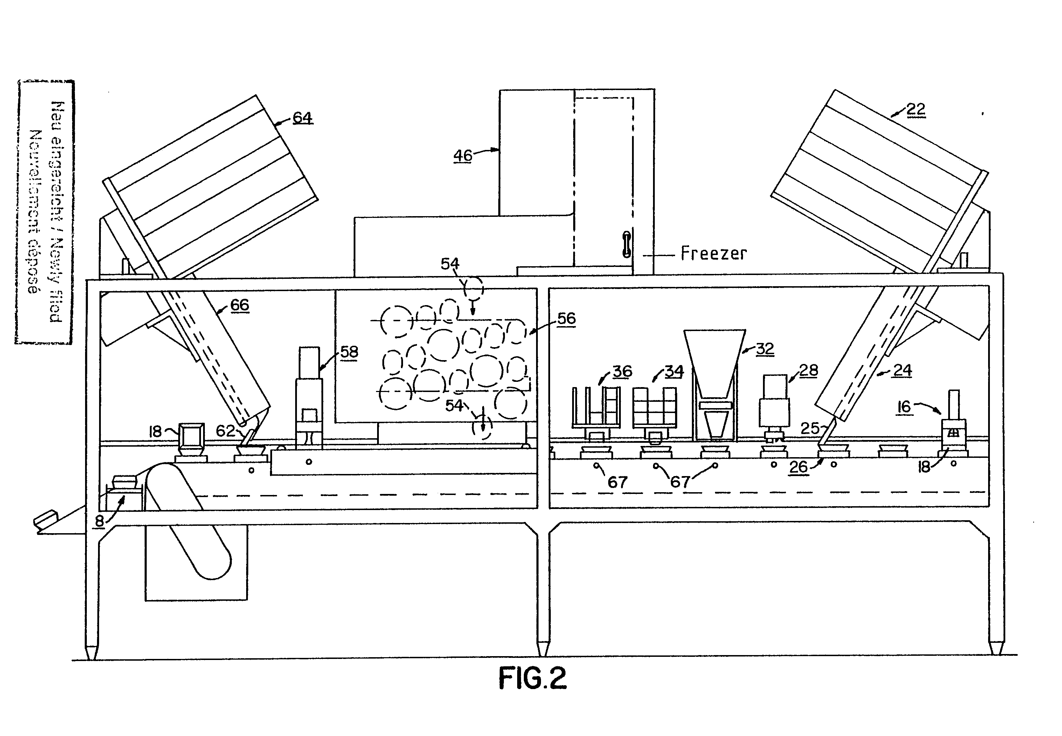

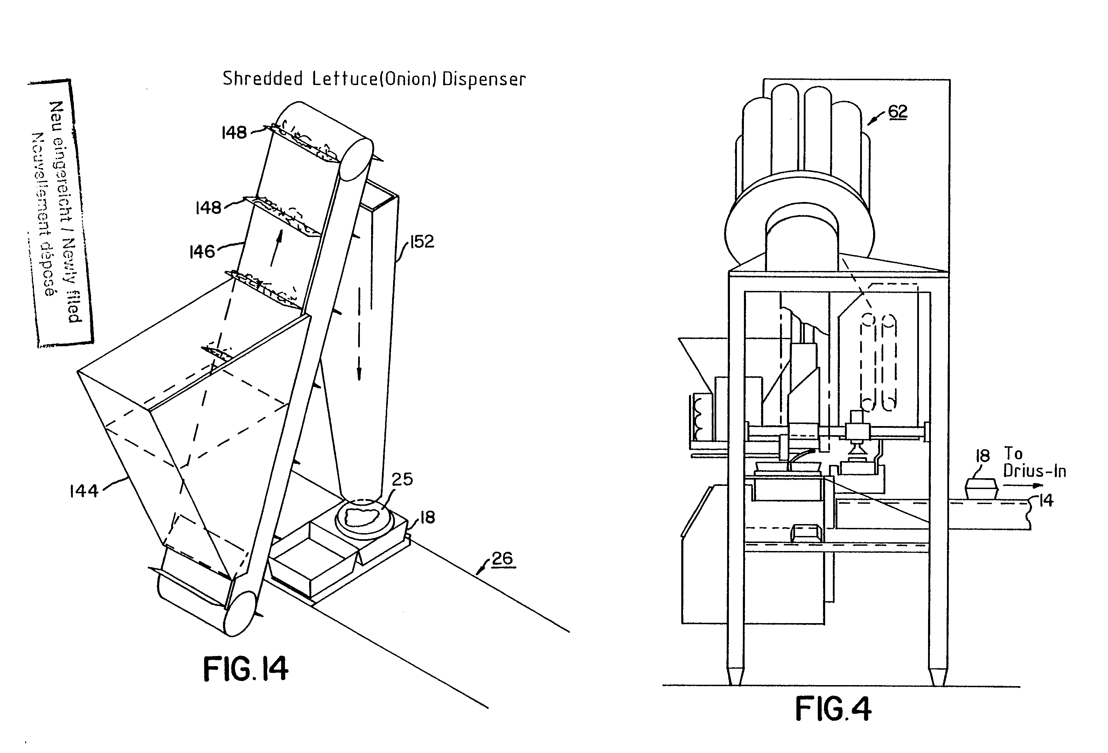

The basic elements of the preparation system are shown by Figures 2, 3 and 4. When an order is received by the computer, a printing mechanism, diagrammatically illustrated at 16, prints the appropriate information on a carton 18 which may be of conventional construction, for example formed of insulating material with a folding lid. Simultaneously, a bun crown 25 is delivered from a "Lazy Susan" storage magazine, generally indicated at 22, to a grill, generally indicated at 24. The printed carton is transported by an indexing conveyor, generally indicated at 26, to a position at the output of the grill 24 where the crown 25 of the bun is placed, cut and toasted side up, in the carton 18. At the next conveyor station, the cut side of the crown is coated with a specified condiment, such as mustard or mayonnaise or a mixture of condiments, by an applicator 28. At the next station, chopped lettuce is added to the bun by a dispenser 32 unless the initial order specified that lettuce be omitted. The conveyor belt then advances one step to position the bun to receive tomato if called for in the order. A tomato slicer and dispenser 34 is loaded with tomatoes from which the end portions have previously been removed. The tomato may be delivered as two side-by-side or over-lapping slices or as one slice centered on the bun crown depending upon order preference.

At the next station, an onion slicer and dispenser 36 delivers one or more slices of onion, if called for in the original order. The dispenser 36 stores a quantity of onions, which have been peeled and the end portions removed, in a number of rotatable magazines.

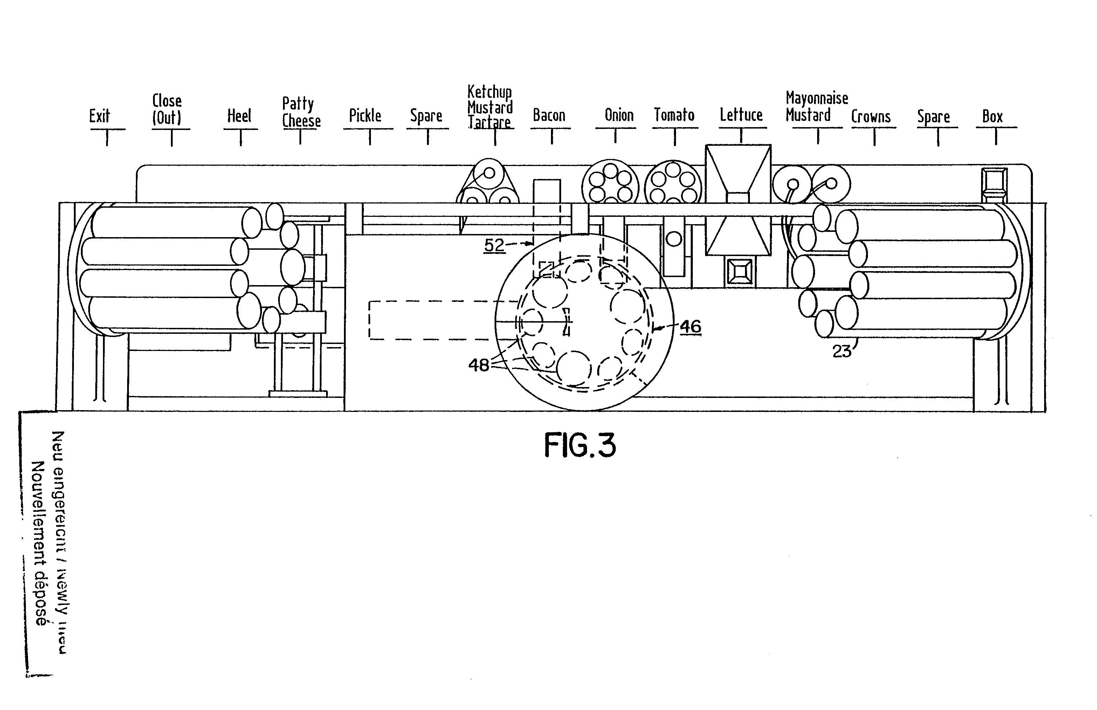

If called for in the order, a bacon dispenser 52 (Figure 3) places one or more strips of bacon on the crown.

If pickle is specified in the order, a pickle dispenser, to be described later, places an appropriate amount of pickle on top of the cooked hamburger patty.

The frozen meat patties are stored in a freezer 46 which contains a series of tubular magazines 48 (Figure 3), arranged in a circle, which may be of different diameters to accommodate different sizes of patties. The magazines are rotated until a hamburger of the appropriate size is positioned at an exit window at the bottom of the stack of patties.

A cheese dispenser slices cheese from the bulk. The patty (or patties) and one or more slices of cheese are loaded to the crown by a patty/cheese loader 58.

A frozen meat patty 54 is fed into a broiler 56 at the same time the crown 25 is placed in the grill 24 both arriving at the patty/cheese loader 58.

The degree of cooking is automatically adjusted by the computer 4 to provide the specified degree of doneness without varying the cooking time. In this example, the cooking time for each meat patty is one minute or less for all degrees of doneness. Mechanisms for accomplishing this will be described in more detail later.

At a suitable time to arrive simultaneously with the crown, the bottom portion 62 of a bun was fed from a storage chamber 64 into a grill 66. When the hamburger patty 54 arrives at this station, the toasted bottom portion of the bun is placed on top of the patty. The carton 18 is then closed and the carton inverted onto the delivery conveyor 8 (or conveyor 14 if directed to a drive-in window) to be carried to the area of the register where the original order was placed. Each station is provided with an indicator light, as shown at 67 in Figure 2, indicates that the particular condiment should be fed to that particular sandwich so that in the event of a malfunction, the condiment may be loaded manually. The operator can then replenish the supplies or manually supplement the operation of the processor as indicated by a separate set of lights on a main control panel (not shown).

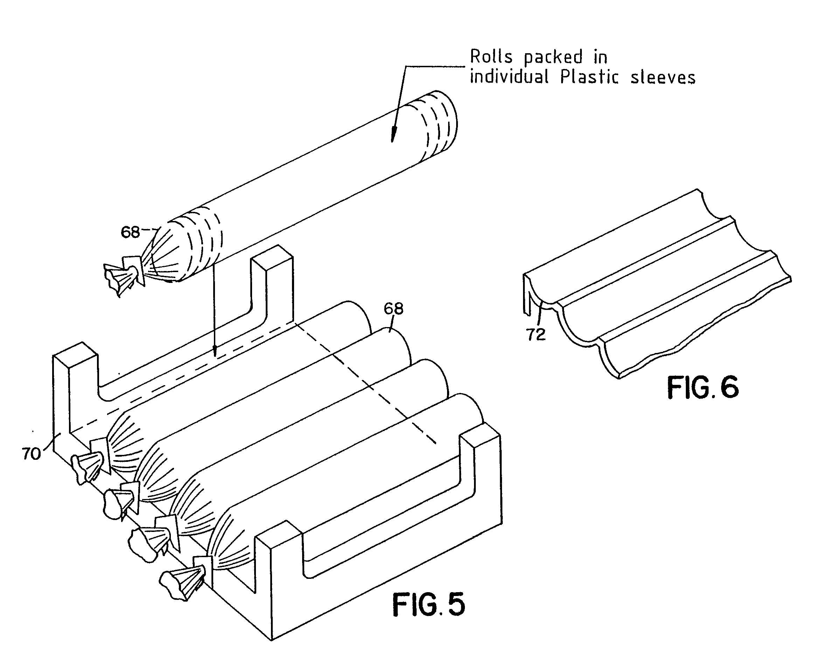

It is useful in a system such as the one described here to pack the crowns and bottoms of the rolls separately. Not only is this an advantage in the loading of the magazines, but it also reduces the space required for the unseparated buns by approximately twenty percent. This results in the delivery trucks of the bakery being able to carry substantially more product and so is an advantage to the bakery as well as to the food retailer. As illustrated by Figures 5 and 6, the heels and crowns of the rolls are packed separately in plastic sleeves 68 which are the same length as the magazines 23 and 65 (Figure 3) of the processor system. These are positioned in plastic shipping trays 70 which may have arcuate bottom portions or which may be equipped with removable plastic inserts 72 with arcuate channels for holding the sleeves of bun parts as illustrated in Figure 6. Alternatively, the rolls or buns may loaded manually during the off-peak hours.

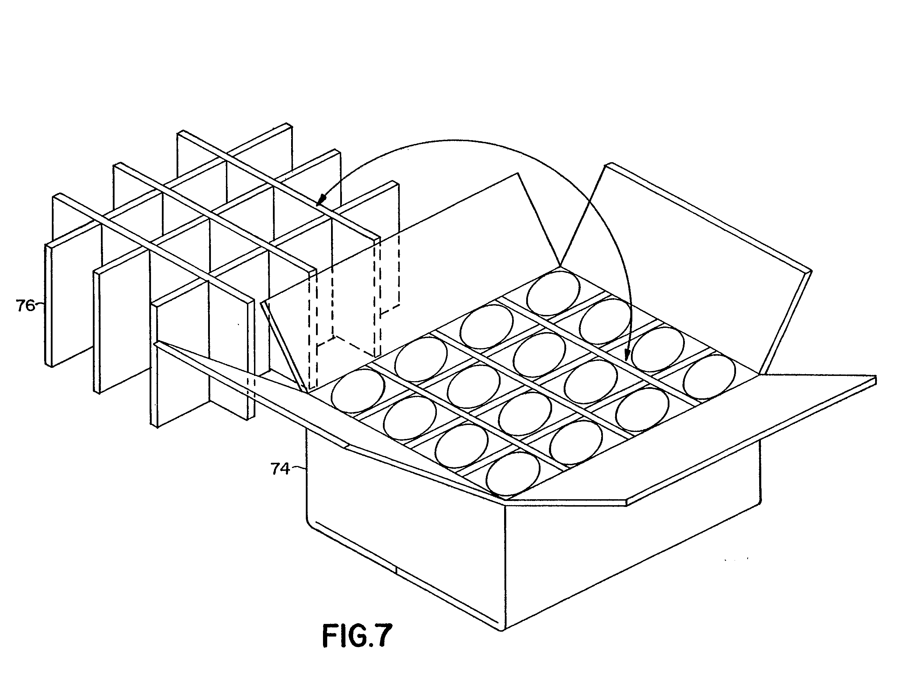

Preferably, the meat patties are packed in shipping cartons 74 (Figure 7) which have relatively rigid partitions 76 that maintain the frozen patties in alignment so they can be loaded readily into the magazines 48 of the freezer.

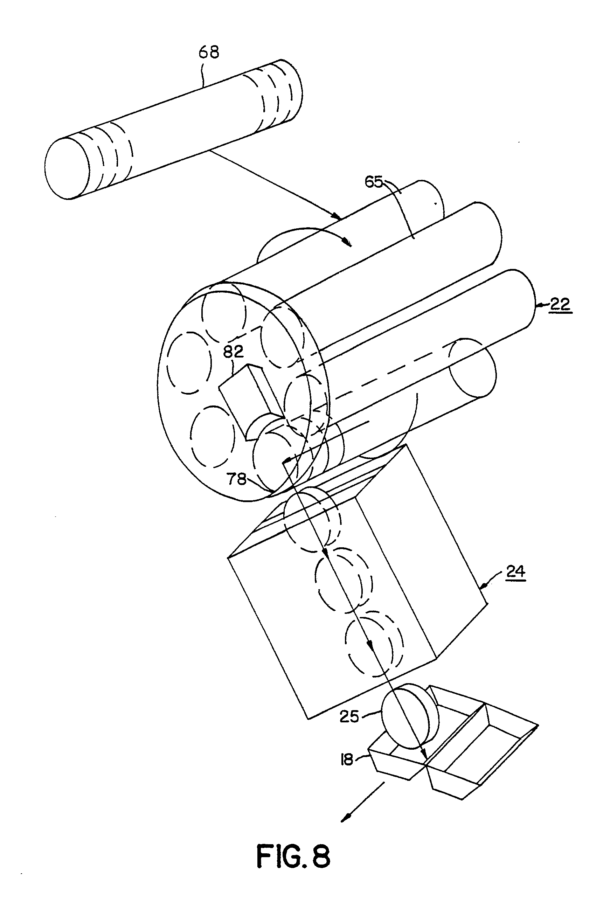

The mechanism for handling the different sizes of bun crowns and heels is shown in Figure 8. The crowns are transferred from the sleeves 68 into the magazines 65 of the processing assembly 2. The magazines are arranged in a circle which can be rotated to bring a particular magazine to an exit window 78 where by means of a transfer plunger 82, the bottom crown or heel in the magazine is pushed into the grill 24 where the crown or heel is grilled before being passed through to the carton 18.

To facilitate the movement of the bun crowns, the magazines 65 are tilted at an angle of about 30 degrees from the horizontal and the path through the grill 24 is tilted at an angle of about thirty degrees from the vertical.

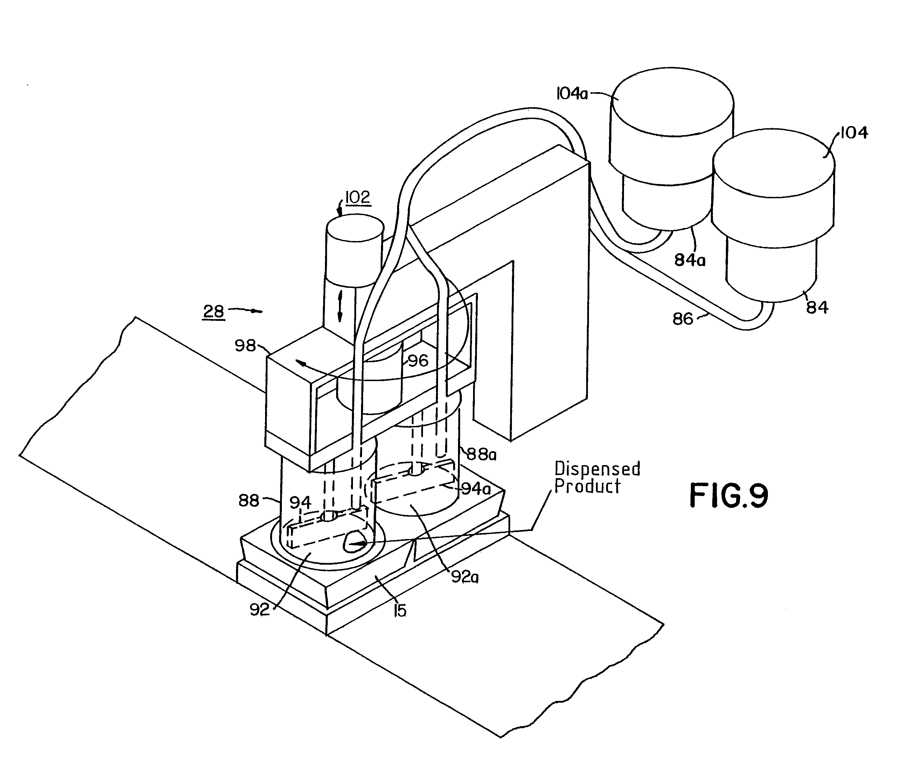

A dispenser 28 suitable for use in the processor assembly is shown in Figure 9. A positive displacement pump 84 contains a supply of a particular condiment, say mustard, and is connected by a hose 86 to the interior of a plastic container 88. The bottom of the container 88 is formed by a screen 92, which in operation is positioned directly over the cut side of the bun crown. A flexible wiper 94 is positioned on the screen 92 and is arranged to be rotated by a motor 96.

A second container 88a is provided for a second condiment, say mayonnaise, and is provided with similar attachments indicated by the same numbers followed by the suffix "a". The containers and the wiper assemblies are supported by rotatable turret 98. The entire turret assembly is arranged to be rotated one-half turn in either direction and to be moved vertically by a motor drive assembly indicated diagrammatically at 102. The hamburger order may specify which of the condiments is to be used and whether the amount is to be "heavy" or "light".

In operation, assume mustard is to be applied to the crown. The turret assembly 98 is then lowered so that the screen 92 engages the bun surface. A stepping motor 104 is activated by the computer and drives the positive displacement pump 84 to deliver the required quantity of mustard to the interior of the container 88 and the wiper blade 94 rotates to press the mustard through the screen 92 onto the bun surface. The turret assembly 98 is then lifted to remove the screen 92 from the bun.

If the requested spread is mayonnaise, the turret assembly 98 is rotated one-half turn to bring the container 88a in position over the bun. The bridge assembly 98 is then lowered. A stepping motor 104a is then activated to operate a positive displacement pump 84a that pumps mayonnaise, in the specified quantity, into the container 88a and the wiper 94a is rotated to spread the mayonnaise on the bun.

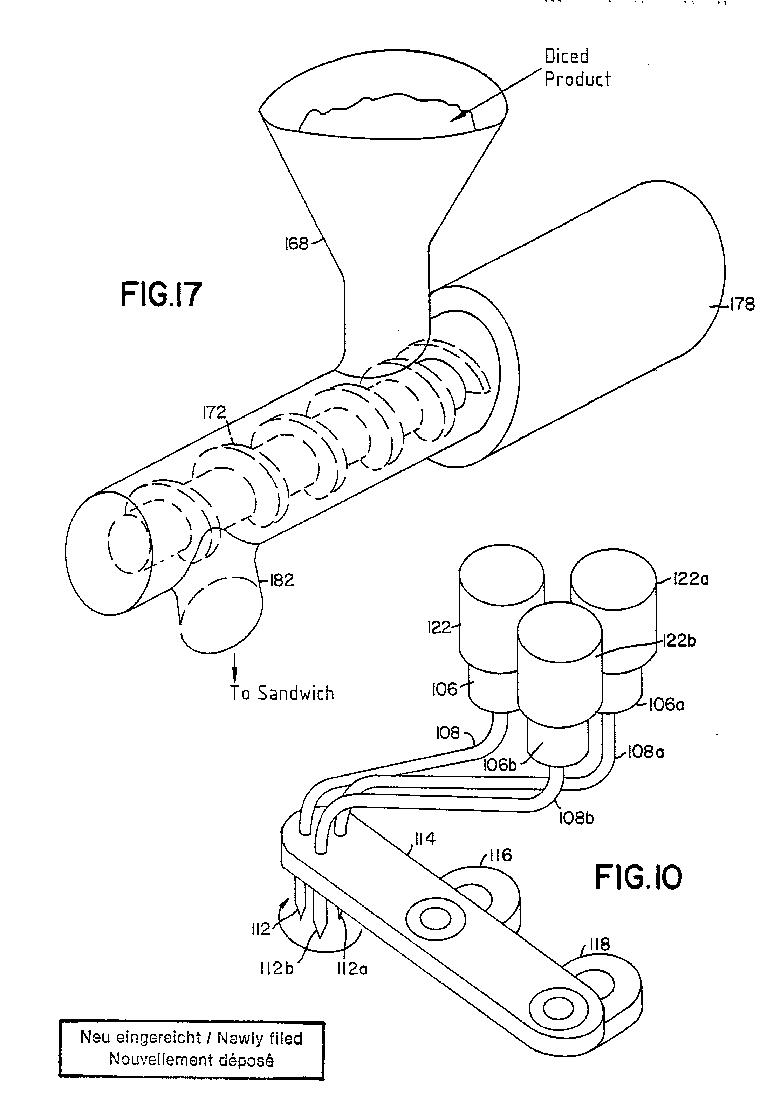

Figure 10 illustrates still another mechanism for spreading the condiments on a roll. A rotatable carriage which also operates vertically, generally indicated at 124, is provided with four arms extending from a central supporting axle (not shown). One arm 126 contains a number of downwardly extending spaced nozzles 128 that are connected by hoses (not shown) to a positive displacement pump and reservoir as described in connection with Figures 9. These nozzles 128 deliver mayonnaise to the bun crown 25 while a spreader knife 132 distributes the mayonnaise evenly over the bun surface. In operation, the carriage 124 lowers to the bun surface and rotates one and one-quarter turns while the mayonnaise is being delivered through the nozzles 128 to the bun surface during one revolution of the carriage 124. The rotation is then stopped and the carriage is raised to return to its original position.

If mustard is called for, the carriage 124 is lowered and a similar pump arrangement delivers the desired quantity of mustard to a second set of nozzles 128a while the carriage 124 is being rotated one full turn in the opposite direction. The supply of mustard is then ended and the carriage raised to its original position.

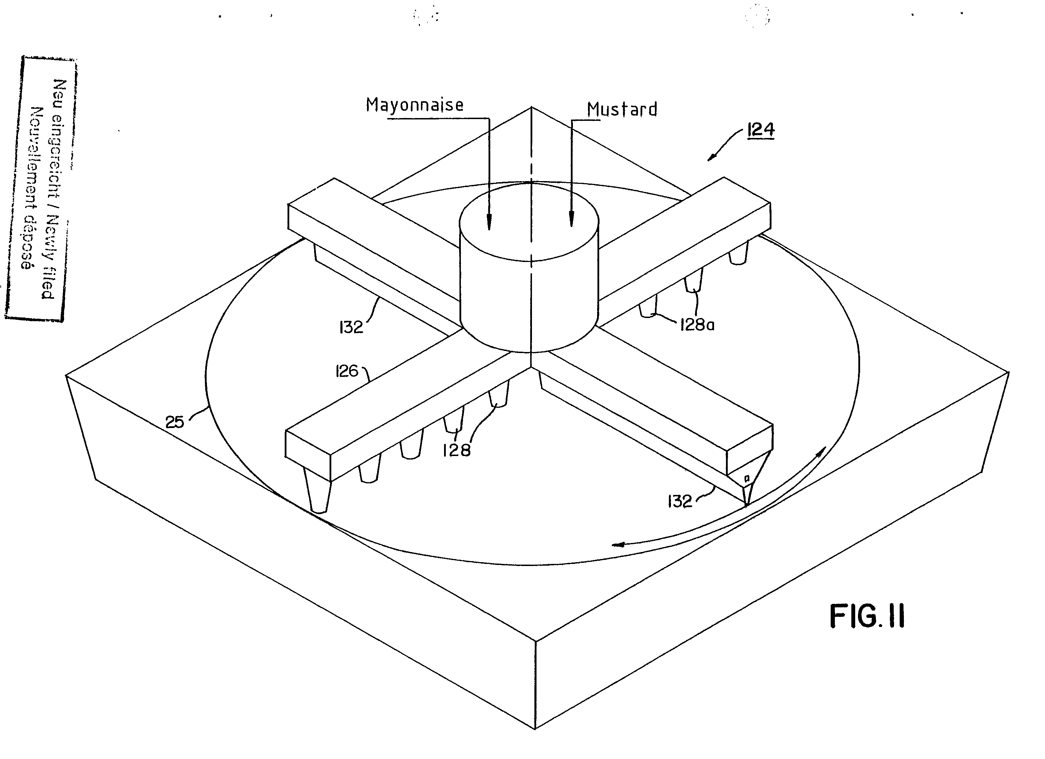

Another system for applying three different condiments selectively to the bun crown is illustrated in Figure 11. Assume in this case that the three condiments are ketchup, mustard and tartar sauce. A supply of tartar sauce is contained in a positive displacement pump 106 that is connected by a flexible hose 108 to a self-closing nozzle 112, formed for example of a rubber valve tip. The end of the hose 108 near the nozzle 112 is supported by an arm 114 that is connected to two spaced eccentric drives 116 and 118.

When tartar sauce is called for, a stepping motor 122 is activated by the computer to deliver the desired quantity of sauce. At the same time, the two eccentric drives are activated by a drive mechanism (not shown). The result is that the nozzle 112 distributes the sauce in a pattern over the surface of the bun crown while the tartar sauce is being dispensed. The eccentric drive 116 rotates the nozzle around a circular path, while eccentric drive 118 is positioned to cause the path followed by the nozzle 112 to be concentric with the diameter of the bun crown.

If ketchup is called for, a stepping motor 122a is activated to drive a positive displacement pump 106a to force the requisite quantity of ketchup through the hose 108a and out the nozzle 112a. The eccentric 118 is adjusted in this case so that the path of the nozzle as it is propelled by the eccentric drive 116 is concentric with the circumference of the bun crown.

In a similar manner, the motor 122b drives a positive displacement pump containing the mustard to dispense it through the nozzle 112b while the eccentric drives 116 and 118 are operated to form a symmetrical pattern on the bun. This arrangement also permits the simultaneous dispensing of two or three different condiments.

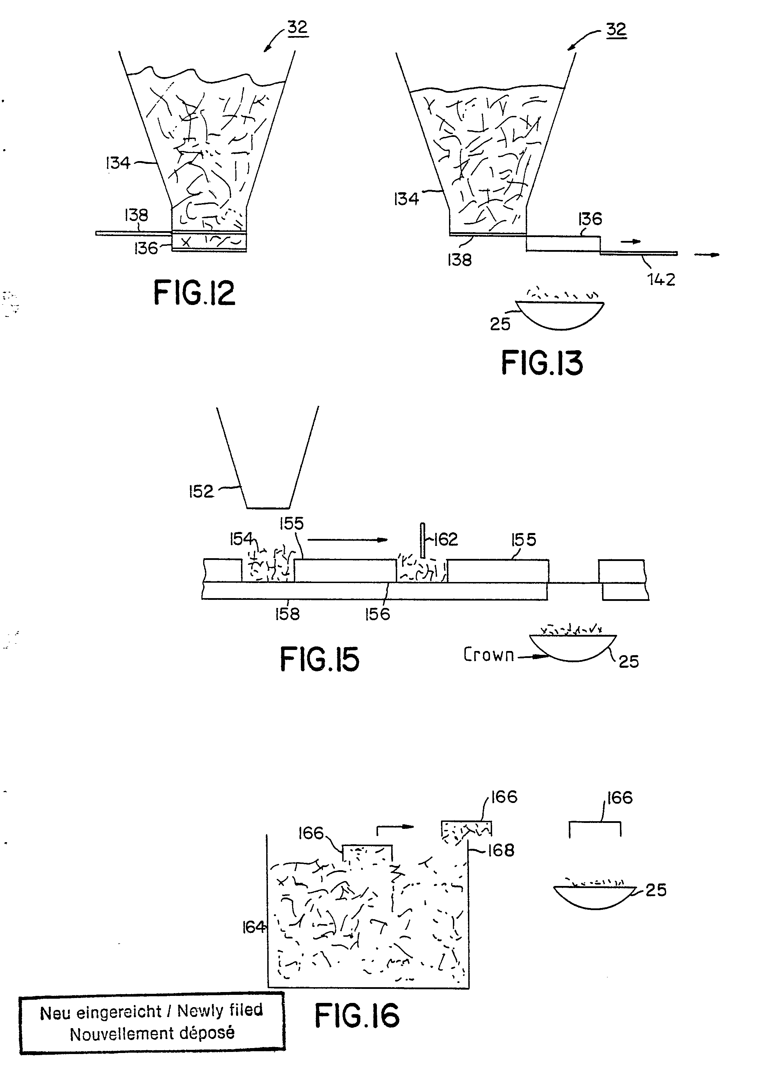

Figures 12 and 13 show further details of the lettuce and onion dispenser 32. The same mechanism may be used for dispensing either chopped onion, lettuce or other vegetable. A conical hopper 134 is filled, for example, with chopped lettuce. The bottom portion of the hopper is in the form of a slideable cup 136 dimensioned to hold the amount of chopped lettuce for one hamburger sandwich. When the lettuce is to be dispensed, the computer 4 causes the cup 136 to slide from the bottom of the hopper 134 to the position shown in Figure 13 while the bottom of the hopper is closed by a slide member 138. When the cup 136 is positioned over the bun crown 25, a slide 142 that forms the bottom of the cup 136 is moved horizontally to open the bottom of the cup and allow the chopped lettuce to drop onto the bun surface. The cup 136 is then returned to its original position forming the bottom of the hopper 134 where it refills with a new portion of chopped lettuce.

Another arrangement for dispensing chopped lettuce or other vegetable is shown in Figure 14. The chopped vegetable is contained in a triangular shaped supply hopper 144 one wall of which is formed by an endless bucket conveyor 146. A series of spaced buckets or projections 148 are dimensioned to transport one serving of the chopped vegetable. In operation, the conveyor is moved one increment to bring one of the buckets 148 over the top of the conveyor support and dump the vegetable into a guide chute 152 that is large enough at its upper end to receive the entire load from the bucket. The guide chute 152 gradually changes shape in a smooth curve downwardly until the bottom end is circular and of appropriate size to distribute the chopped vegetable on the crown surface which is then positioned directly beneath the chute opening.

Another arrangement for dispensing the chopped vegetable in predetermined quantities is illustrated by Figure 15. The load chute 152 is supplied, by bucket conveyor or other device, with chopped vegetable in increments at least as much as one serving. The chute directs the chopped vegetable into a pocket 154 formed between spaced blocks 155 carried by a conveyor belt 156 which has an open bottom but which is normally closed by the surface of a table 158. After receiving the vegetable, the pocket 154 is moved under a doctor blade 162 that removes any excess amount of chopped vegetable. The conveyor belt then moves the chopped vegetable over an open area of the table 158 positioned directly above the bun crown 25 releasing the vegetable and allowing it to drop directly upon the bun surface. The motion of the conveyor may be either rotary or reciprocating.

Figure 16 illustrates yet another apparatus for dispensing the chopped vegetable. The chopped lettuce or other vegetable is stored in a supply bin 164. A vacuum cup 166 having a porous bottom is connected to a vacuum pump (not shown) to produce a continuous flow of air through the cup 166 and out through the floor of the cup. This inverted cup is lowered into the supply bin where the air current causes it to be filled with the chopped vegetable. The cup 166 is then moved across the surface of a doctor blade 168 which may be one edge of the supply bin 164. The cup 166 is then positioned over the bun crown 25 and the vacuum pump disabled to release the vegetable onto the bun crown. A standard type pick and place mechanism can be used to provide the necessary motion. Instead of a vacuum cup, a claw type pick-up can be used, but has the disadvantage that precise control of incremental quantities is more difficult.

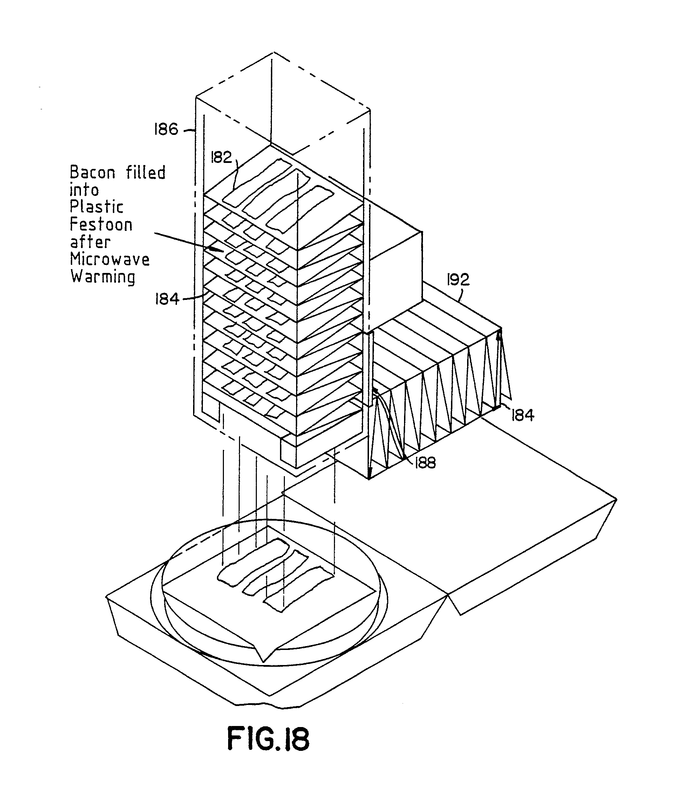

An auger system for dispensing the chopped food product is shown in Figure 17. The diced food product, say chopped onion, is placed in a supply hopper 168 that feeds into an auger feed mechanism 172 that is driven by a stepping motor 178. Initially, the auger feed 172 is operated long enough to fill the transport channel. Each time chopped onions are called for, the stepping motor is actuated for a period of time corresponding to whether the onion is to be "heavy", "medium" or "light". The appropriate amount of chopped onion is dispensed through the outlet orifice 182 directly, or by an auxiliary conveyor, onto the surface of the bun crown.

A dispenser for slices of bacon is illustrated in Figure 18. The cooked bacon slices 182 are distributed on the folds of a plastic festoon 184, each fold carrying the number of slices that are to be placed on one patty. After warming in a microwave oven, the festoon 184 is placed in a rectangular magazine 186. When a crown requiring bacon is positioned directly beneath the magazine 186, a removal blade 188 is inserted, by a suitable mechanism, not shown, into one of the folds of the festoon 184 and moved rearwardly of the magazine to cause one of the folds to be released and drop its charge of bacon onto the crown. The removed fold is then released into a collection tray 192 for re-use.

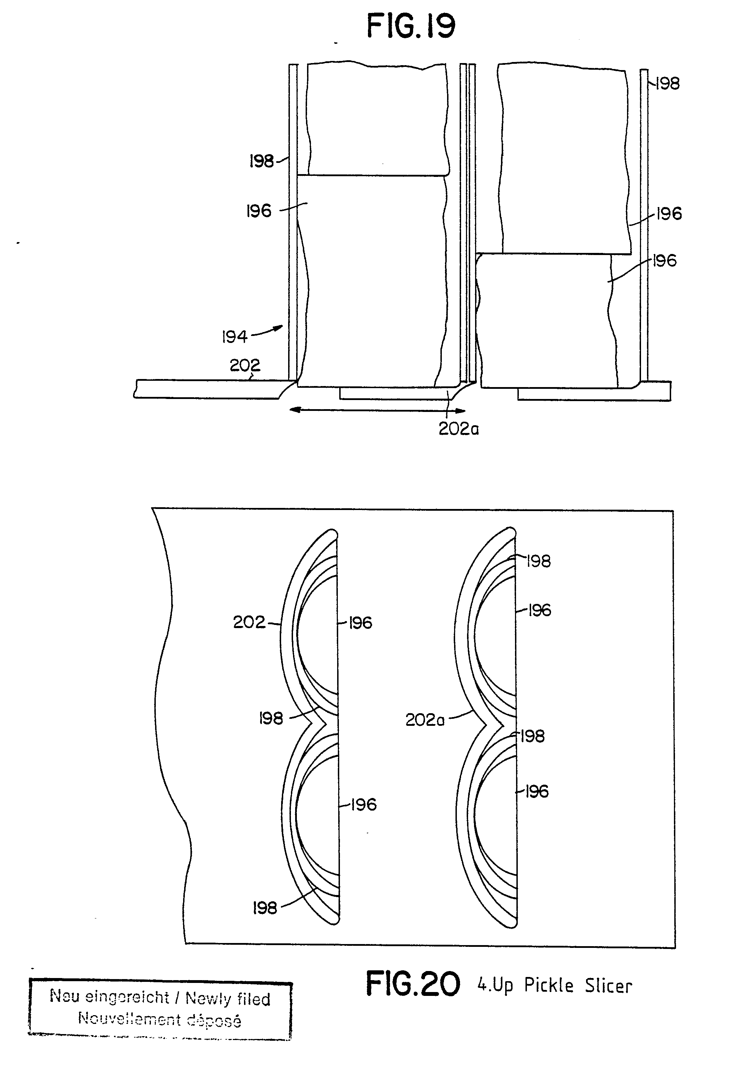

Figures 19 and 20 illustrate a pickle slicer and dispenser 194 that forms part of the hamburger processing system. The end portions are removed from a number of pickles 196 which are then stacked end-to-end in four magazines 198. To dispense four slices of pickle simultaneously, a first two-section knife 202 is moved toward the right as viewed in Figure 19 to remove two pickle slices and drop them on the hamburger patty. Simultaneously a second knife 202a moves toward the right to remove an additional two pickle slices and drop them in a different position on the hamburger patty. The arcuate shape of the slicing knives 202 and 202a can be seen in Figure 20. The quantity of pickle placed on a single patty can be controlled by adjusting the thickness of the slices or by dropping additional slices. Known mechanisms can be used for the operation of the slicers under the control of the computer 4.

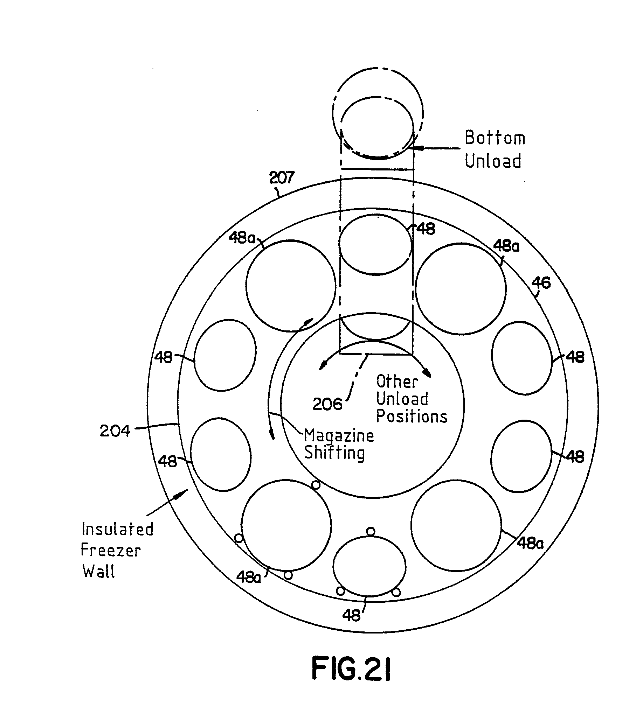

Further details of the patty storage-dispenser 46 are shown in Figure 21. The storage and dispensing functions are arranged to accommodate two sizes of patties. Six magazines 48 are of smaller diameter to receive the smaller patties while four larger magazines 48a accommodate the larger patties. In this example, the magazines 48 each hold 96 patties and the magazines 48a each hold 84 patties to provide a total storage capacity for 920 hamburger patties. When a hamburger patty is to be dispensed, a carriage 204 is rotated to bring an appropriate magazine 48 or 48a opposite a pusher block 206. The pusher block is then moved radially outwardly so that its arcuate surface engages the lowermost patty in the adjacent magazine and pushes it outwardly to drop into the broiler. The carriage 204 is surrounded by an insulated freezer wall 207.

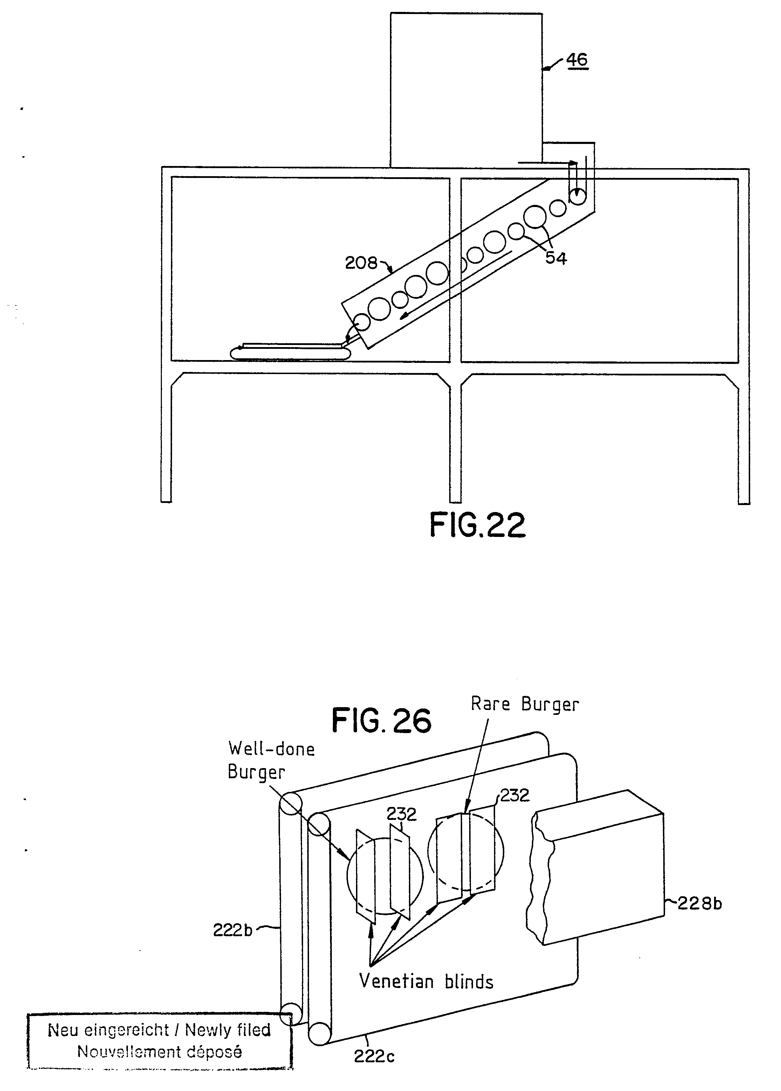

One broiler arrangement is shown diagrammatically in Figure 22. The hamburger patties pass in succession through a broiling chamber 208 having opposing heated surfaces that produce the desired degree of doneness in approximately one minute. The patties are dispensed into the broiler from the dispenser 46 and follow a path, some 30-45 degrees from the horizontal, downwardly between grid wire belts (not shown) that hold the hamburgers in place between the opposing heater elements. The necessary heat may be supplied by gas, electricity, or other fuel. The use of a wire grid to maintain the position of the hamburgers provides desired grid marks on the hamburger patties. The total length of the broiler 208 is approximately five feet and it has a capacity of one hamburger every four seconds.

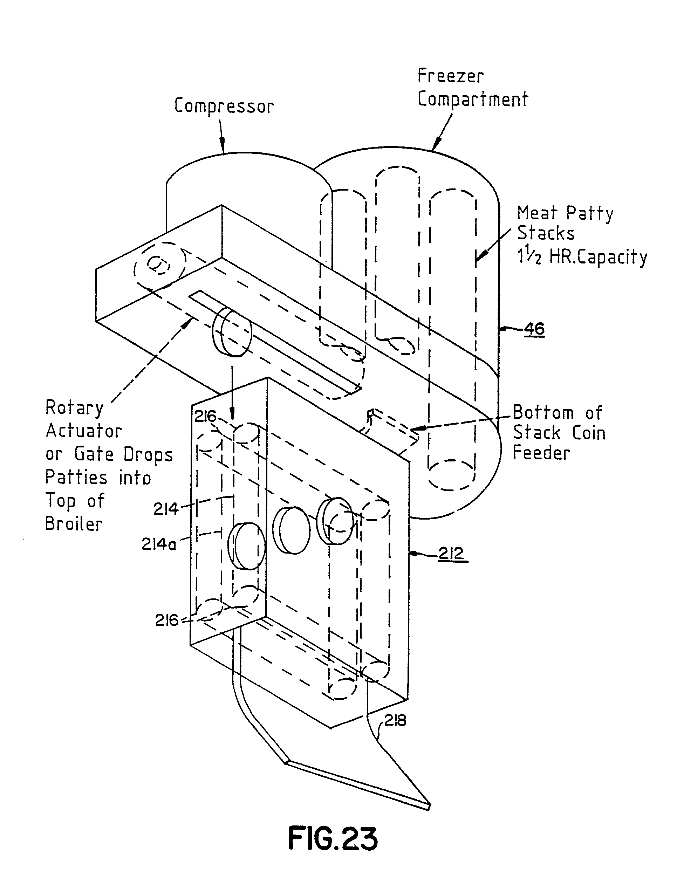

Figure 23 illustrates a broiler requiring less space than the one shown in Figure 23. The hamburger-patties are delivered from the Lazy Susan storage-dispenser 46 into the top of a vertical broiler compartment 212. The broiling compartment includes two endless wire mesh belts 214 and 214a. Each belt is made up of spaced horizontal wires and are moved continuously over end rollers 216. When a hamburger patty is dropped into the broiler compartment, it is engaged on opposite sides by the wires of the belts 214 and 214a and moves downwardly with those wires. The time through the broiler is adjusted to provide the desired degree of doneness. When the patty reaches the bottom of the broiler it is dropped onto a discharge chute 218 that is arranged to deliver the patty to a high speed conveyor (not shown) that carries the patty to the patty-crown assembly station.

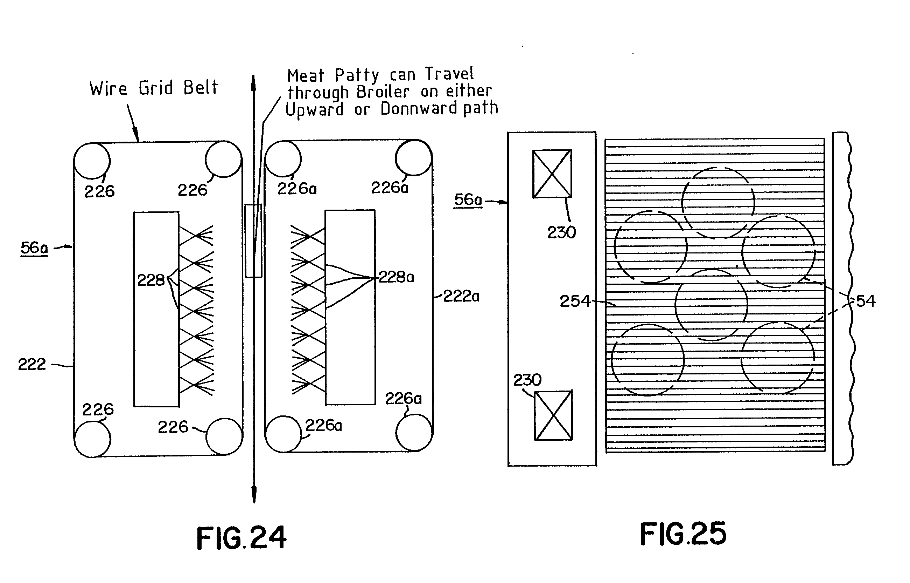

Figures 24 and 25 show an improved broiler in which two wire mesh grids 222 and 222a made up of horizontal grid wires 224 spaced, for example, one-quarter inch apart and are in the form of endless belts. The grid 222 moves over rollers 226 so that when moving in the downward direction, the grid wires 224 are within the flame area and when moving upwardly are outside the flame area and all within the heat chamber. The wire mesh grid 222a is similarly driven by rollers 226a. The hamburger patty to be broiled is dropped into the space between the opposing grid wires 224 and moves downwardly in front of two heater elements 228 and 228a. The hamburger patty may be supported by the pressure of the grid wires alone or additional cleats or other structures may be provided. In this arrangement, only the grid wires are exposed to the broiler heat. Bearings, illustrated diagrammatically at 230, for supporting the rollers 226 and 226a are positioned entirely outside the heated area. This permits the broiler to be self-cleaning by the application of high temperatures. In this example, the hamburger patties 54 move downwardly through the broiler, but the operation can be reversed so that the patties move upwardly through the heated region.

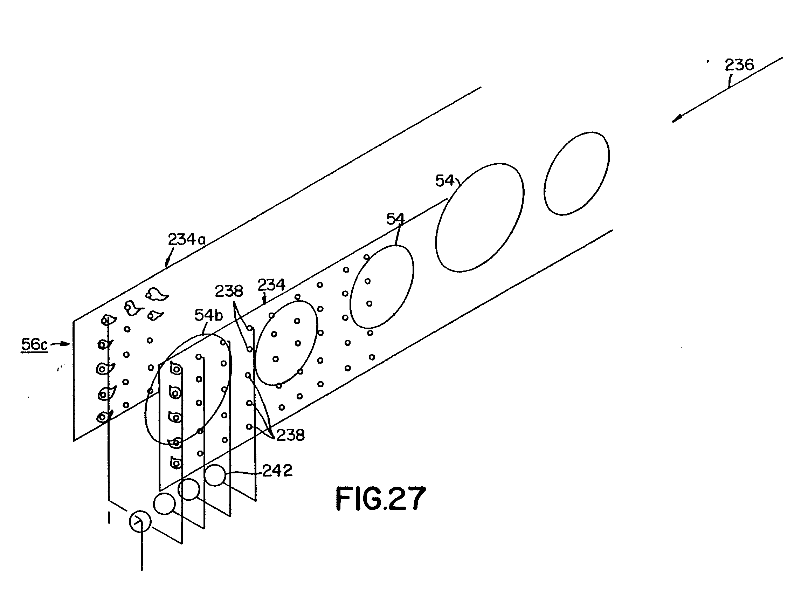

A number of alternate methods can be used to control the degree of doneness of individual patties. Figure 26 shows a series of "venetian blind" heat deflecting vanes 232 positioned between the burner 228b and the surface of the hamburger patty that is being carried by the wire mesh grids 222b and 222c. The vanes 232 are actuated magnetically under the control of the computer 4. If a hamburger patty is to be cooked well-done, the vanes are swiveled to an open position to permit maximum heat to reach the hamburger patty traveling along the path directly opposite those vanes. For minimum doneness, the vanes are moved to a closed position to shield a portion of the heat from the hamburger traveling along the path opposite those vanes. Similar sets of vanes (not shown) are positioned on the opposite side of the hamburger patties. This method of controlling the degree of cooking can be adapted to the various broiler forms described here.

Figure 27 illustrates an alternate method of heat control in which the hamburger patties 54 are transported through a broiler chamber 56a by wire mesh grids (not shown) of the general kind already described. The heat for the broiler is provided by two sets of gas jets 234 and 234a positioned on opposite sides of the hamburger patty path. The flame height of each jet in each vertical row is controlled by the computer 4 in accordance with the degree of cooking requested for a particular patty. For example, suppose a particular hamburger patty 54b, moving along the path indicated by the arrow 236, is to be cooked "rare". Each of the five jets in a vertical column, illustrated at 238, is controlled by a valve 242. When the patty 234 reaches the area of the jets 238, the computer 4 reduces the intensity of the flames of the jets 238 to the minimum value. The other rows of jets are similarly controlled as the patty 54b traverses the broiler. If a particular patty is designated for a greater degree of doneness, the jets are adjusted along the path to increase the heat as that particular patty traverses that area. With this arrangement, all hamburger patties move at the same speed through the broiler area while each is cooked in accordance with the individual instruction stored in the computer 4.

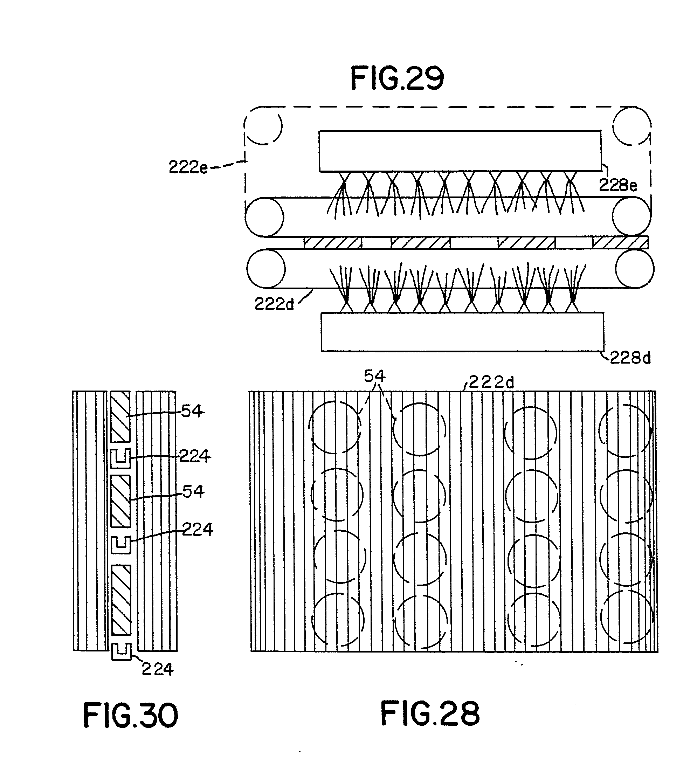

Figures 28-30 show an arrangement for disposing of the grease released by the hamburger patties during the broiling process. Figure 28 shows an endless grid wire belt 222d that cooperates with a grid wire belt 222e to transport the hamburger patties horizontally through the broiler chamber. The patties 54 are arranged on edge in multiple rows and are moved horizontally through the cooking area. The heat is provided by two arrays of gas jets illustrated at 228d and 228e. The path of the grid belts may be entirely within the flame area, as illustrated by the belt 222d in Figure 29, or the return path may be outside the flame area as illustrated by the belt 222e. As shown in the partial end view of Figure 30, a grease collection channel 242 is positioned horizontally beneath each horizontal row of hamburger patties 54. The channels 242 are tilted slightly so that the grease is collected in a larger container (not shown) at one end of the broiler chamber.

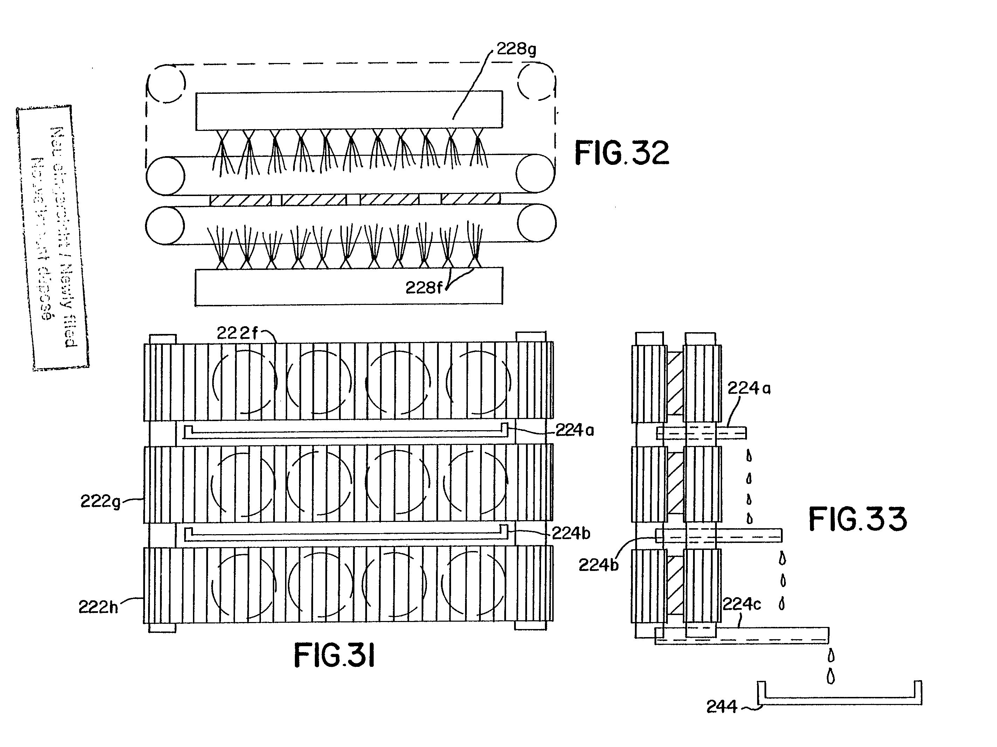

An alternate arrangement of the grease collection system is illustrated by Figures 31-33. In this embodiment, three vertically spaced wire grid belts 222f, 222g and 222h move horizontally through the broiler chamber. Another set of similar wire belts positioned on the opposite side of the hamburger patties provides the needed support for the patties. Arrays of gas jets, as illustrated at 228f and 228g in Figure 32, provide the controlled heat for the broiling process. Beneath each grid belt, a grease collection channel, illustrated at 224a, 224b and 224c in Figures 31 and 33, collect the grease from one row of hamburgers. As shown by Figure 33, the grease from each of these channels is collected in a larger container 244. This arrangement has a number of advantages. For example, the individual belts could travel at different speeds to provide a different degree of cooking for the hamburgers in each row. the hamburgers to be cooked well-done would all be placed between the slowest moving pair of grid belts and those requiring the least cooking would be placed between the fastest moving pair of grid belts. It is preferred, however, to provide the same operating speed and cooking time for each of the belts and to vary the flame intensity for the different rows. The hamburger patties requiring the most cooking would be placed between the grid belts subjected to the highest heat intensity and those requiring minimum cooking would be placed between belts traveling through a region of lower heat intensity. Another alternative to obtain the desired variation in cooking, is to make the belts 222f, 222g and 222h of different lengths.

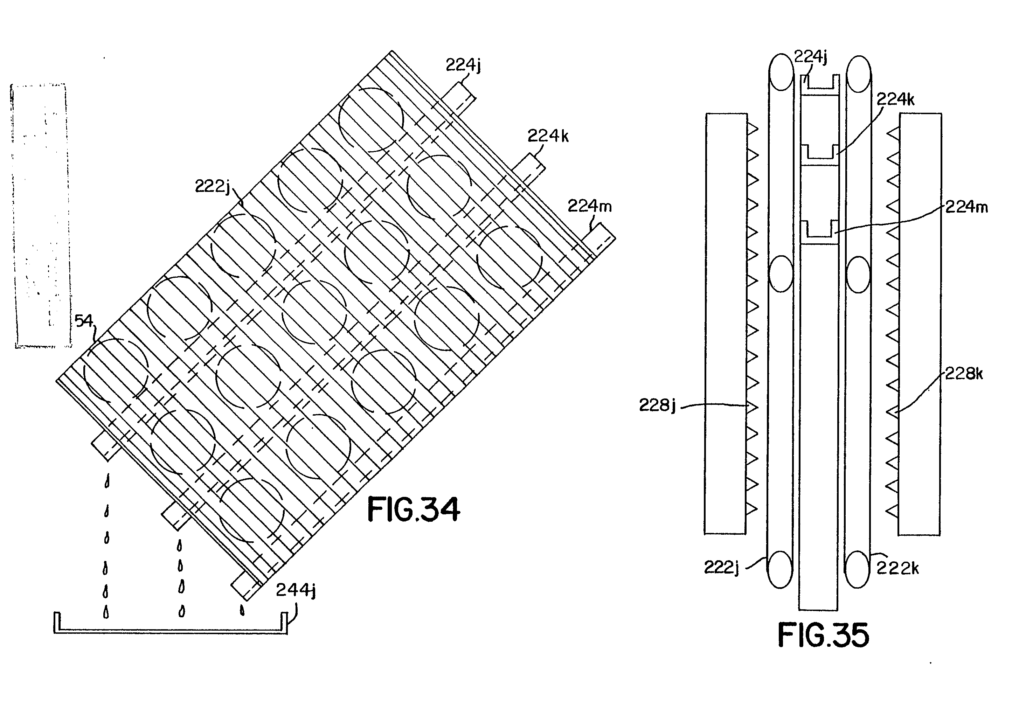

Another grease collection system is shown in Figures 34 and 35 in which the hamburger patties follow an angular path downwardly through the broiling region. As previously described the hamburger patties 54 are supported between two endless wire grid belts 222j and 222k which in this instance travel upwardly at an angle to the horizontal. The wire grid belts support multiple rows of patties. Between each row of patties and extending parallel with the direction of patty movement is a grease collection channel, as shown at 224j, 224k, and 224m. These channels drain into a common collector 244j.

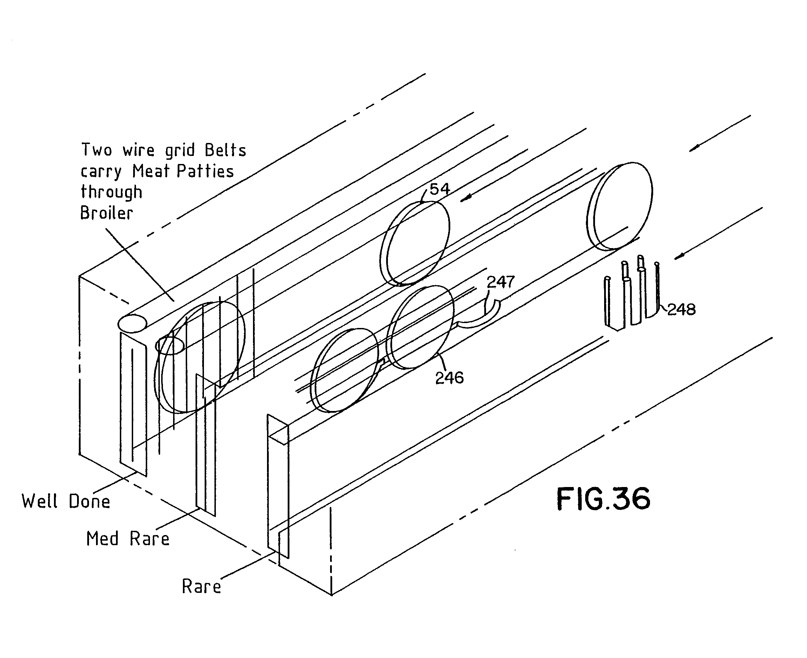

An alternative arrangement of the cooking rows is shown in Figure 36. Here, the hamburger patties 54 are arranged in horizontally spaced rows that move in a horizontal direction. The grid belt structure for each row of patties is the same as previously described. The patties 54 may be supported solely by the pressure exerted by the wire grid belts or they may be supported by a conveyor belt 246 having a series of arcuate pockets 247 each supporting one hamburger patty. Another alternative is to provide wire support cages, as shown at 248, which are attached to a moving conveyor belt and which have upwardly extending wires to support the hamburger patties. With the latter arrangement, the wire grid belts may be omitted and the desired grid marks provided by the supporting members of the cages 248. As previously described, variable cooking conditions may be provided by variations in flame intensity, the length of the individual cooking paths, or conveyor speed.

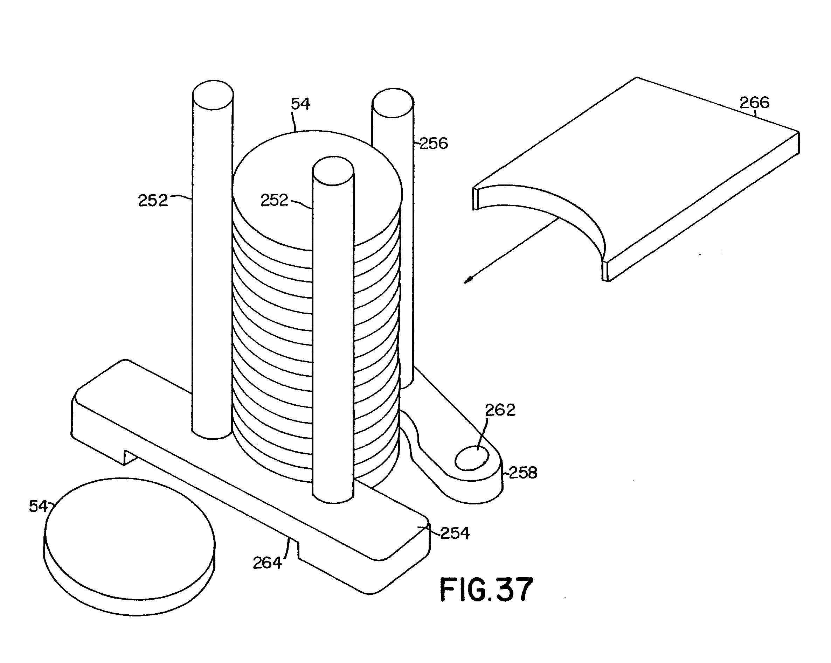

Figure 37 illustrates a mechanism for removing the bottom patty from a stack and which may be incorporated into any of the frozen patty dispensers previously described. Two vertical stationary guides 252 extend upwardly from a support 254. A third guide 256 extends upwardly from a movable support 258 that is hinged at 262 to permit the guide 256 to be moved away from the stack of hamburger patties. To load the patties into the stack, the guide 256 is moved away from the fixed guides 252. After the frozen patties are loaded, the guide 256 is returned to a position that will insure alignment of the patties while allowing sufficient room for the patties to move downwardly among the guides. The supports 254 and 259 are supported on a smooth surface (not shown) so that the bottom patty rests on this surface. The support 254 has a cut-out 264 large enough to permit the passage of a hamburger patty. A similar cut-out (not shown) in the support 258 permits the movement of a "coin-feed" pusher bar 266 that slides through the cut-out in the support 258 to push the lowest patty through the cut-out 264 for transport through the broiler chamber.

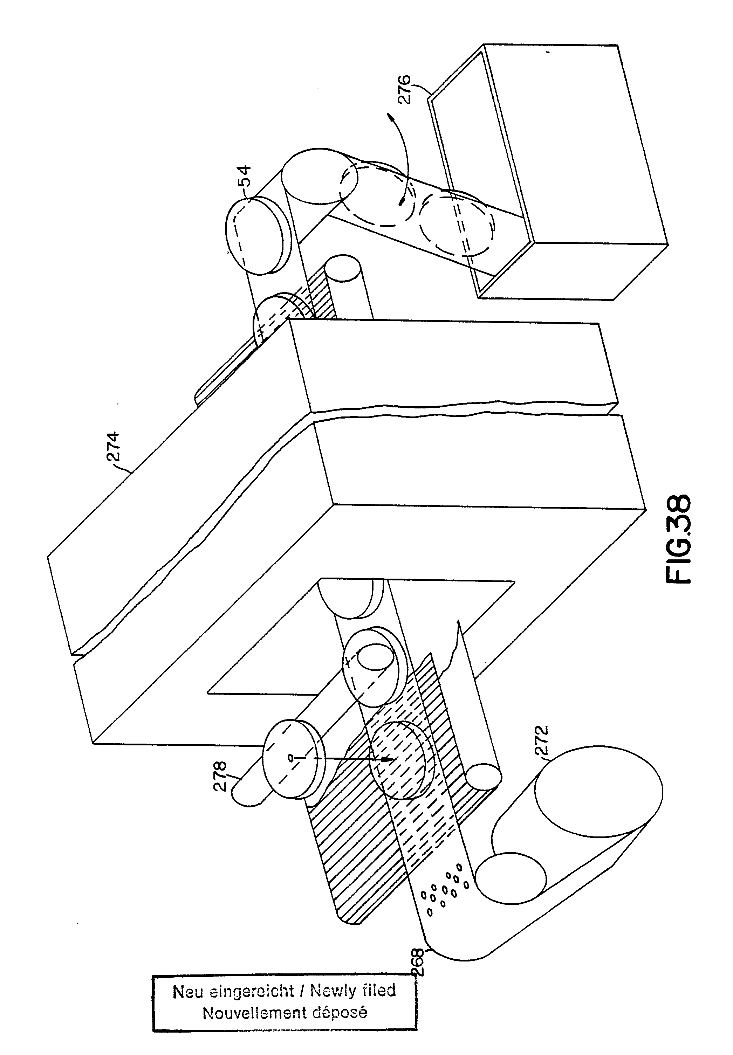

For maximum efficiency at the retail food establishment, it is desirable to package the frozen patties in a manner that will permit rapid loading of the storage area of the hamburger processing equipment. Such a system is illustrated by Figure 38 in which a plastic strip 268 is fed from a supply roll 272 through a freezer chamber 274 and into a shipping carton 276. At the entrance to the freezer chamber 274, fresh meat patties are placed on the plastic strip and pressed against its surface by a roller 278. This pressure will cause the patty to adhere to the plastic strip 268 sufficiently to permit the subsequent handling operations. If necessary, the adhesion to the plastic may be increased by using a dimpled or perforated plastic strip. At the other end of the freezer chamber 274, the plastic strip carrying the hamburgers is festooned into the shipping carton 276.

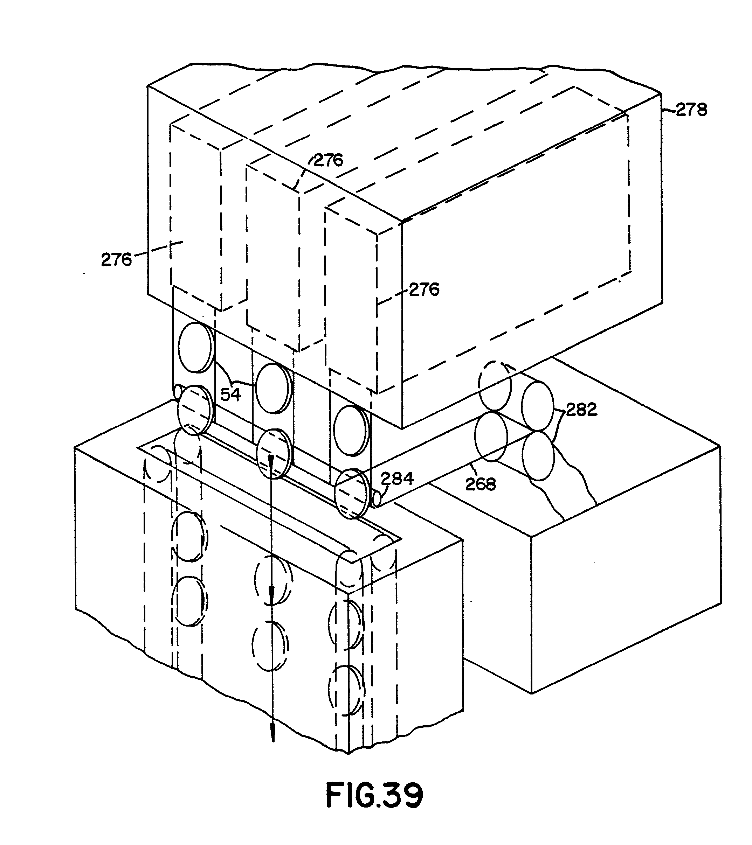

These shipping cartons 276 are designed to fit into a freezer storage chamber 278 (Figure 39) at the retail food establishment. To feed the patties into the broiler, the plastic strip 268 carrying the hamburger patties 54 is pulled from the shipping carton 276 by a pair of nip rollers 282. In traveling from the carton 276 to the nip rollers, the plastic strip passes partially around a small-diameter peel-off roller 284. This sudden change in the path of the plastic strip causes the hamburger patty to be stripped from the plastic support to be received by the broiler mechanism. As illustrated, a number of cartons 276 may be placed in the freezer chamber 278 for simultaneous or independent supply to the broiler mechanism.

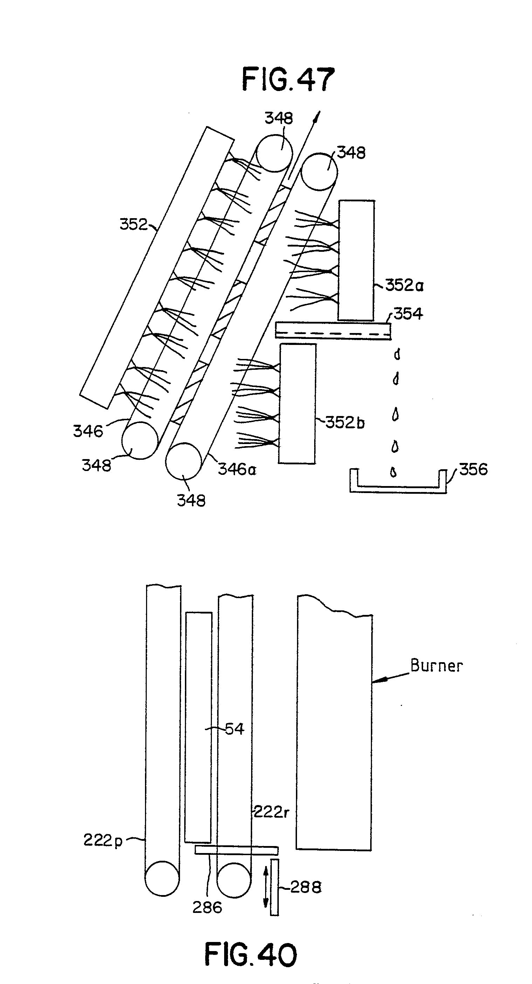

Figure 40 shows another arrangement of the broiler. In this example, two wire grid belts 222p and 222r propel the hamburger patties vertically through the cooking region between heat sources as described previously. The degree of doneness is controlled by the cooking time which is regulated by removing the patty from the broiler area at the appropriate time. Each hamburger patty 54 is held in place by a pivoted support 286 and is free from contact with the wires of the grid belt. The support 286 is carried by the grilling conveyors and is controlled for release of the hamburger from the broiling area by the computer 4. At the appropriate time, a release mechanism, indicated diagrammatically at 288, is actuated to release the hamburger patty and permit it to drop downwardly from the broiler onto a conveyor belt (not shown) or other device for positioning it onto the bun crown.

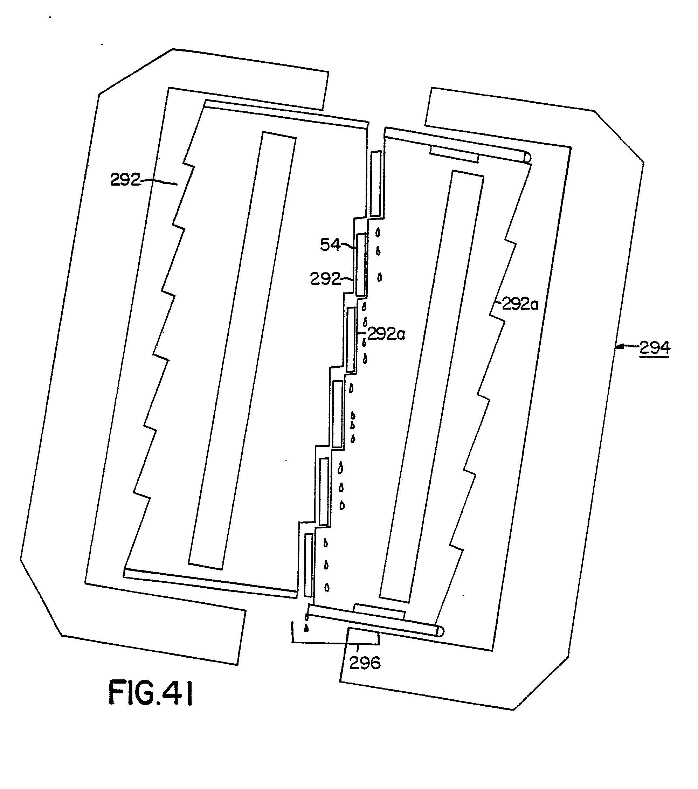

Figure 41 shows another broiler arrangement for collecting the grease released by the hamburgers during cooking and preventing the grease from dropping on other hamburgers. A first wire mesh conveyer 292 is formed with a step pattern, each step having a height approximately equal to the diameter of a hamburger patty and a rise approximately equal to the thickness of a patty. The conveyor 292 operates in conjunction with a second similar wire mesh conveyer 292a. The two endless conveyors pass through the broiling region of a broiler 294 in a substantially horizontal direction. The hamburger patties are placed between and held in position by the two conveyors. The entire broiler 294 is tilted slightly as illustrated so that the hamburger patties of each row are laterally offset from those in the rows above. With this arrangement, the grease dropping from each patty during broiling does not drop onto a lower hamburger but drops instead into a collection tray 296.

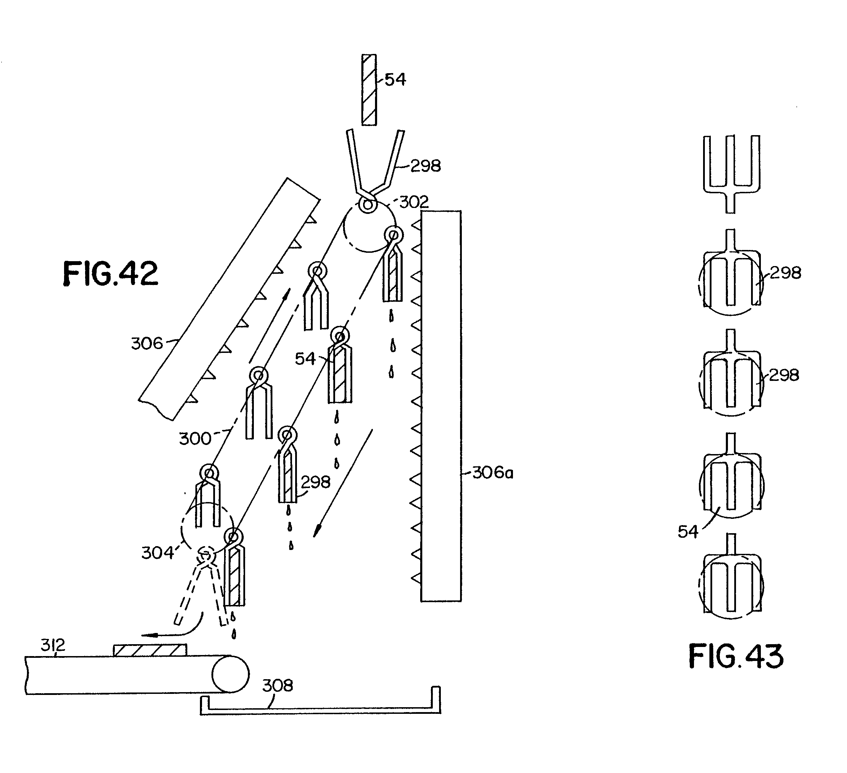

An alternate method of preventing the grease from the hamburger patties falling on other patties is illustrated in Figures 42 and 43. A series of spring-tensioned grippers 298 are suspended at spaced locations from an endless conveyor chain 300 that passes over upper and lower drive rollers 302 and 304. When a gripper 209, which is spring-biased toward its closed position, reaches the topmost position on the drive roller 302, an opener mechanism (not shown) opens the gripper and maintains it in an open position long enough to receive a hamburger patty 54 that is dropped from above into the gripper. The gripper 298 is then allowed to close and hold the hamburger in the gripper for the broiling process. The chain 300 moves the gripper downwardly through the broiling region between two burner arrays 306 and 306a. Because the conveyor chain 300 moves downwardly at an angle from the vertical, the grease from each hamburger patty drips directly into a collection tray 308. At the bottom of the hamburger path, an opening mechanism (not shown) on the roller 304 opens the gripper and allows the hamburger to drop onto a wire grid conveyor belt that delivers the patty to the bun. The wire grippers 298 may be formed with three grippers on each side as shown in Figure 43 or there may be more grippers of narrower width. These grippers provide the desired grill pattern on the broiled hamburgers.

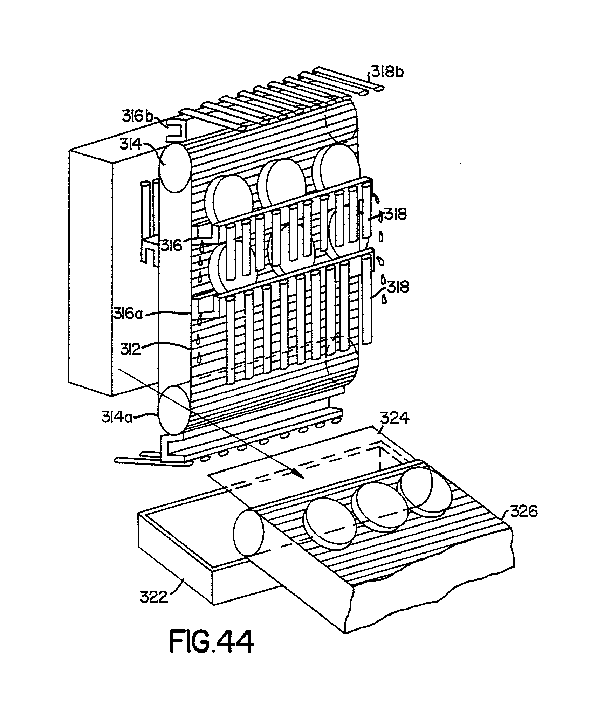

Figure 44 illustrates the use of a single wire grid conveyor in broiling the hamburger patties. An endless conveyor 312 having parallel cross wires passes over two drive rollers 314 and 314a. A row of meat patties to be broiled is placed in a supporting and grease-discharge channel 316. This channel has a row of downwardly extending retainer bars 318 that hold the patties in the next lower channel 316a. The channel 316b following the channel 316 caries the bars 318b that trap the hamburger patties that are supported by the channel 316. Grease released by the patties during broiling flows to the end of each channel 316 and drops down into a collection tray 322. When the channel reaches the bottom of the movement and the broiling process is completed, the patties are released into a chute 324 that deposits them onto a wire grid conveyor that transports the patties to the area where they are placed on the buns.

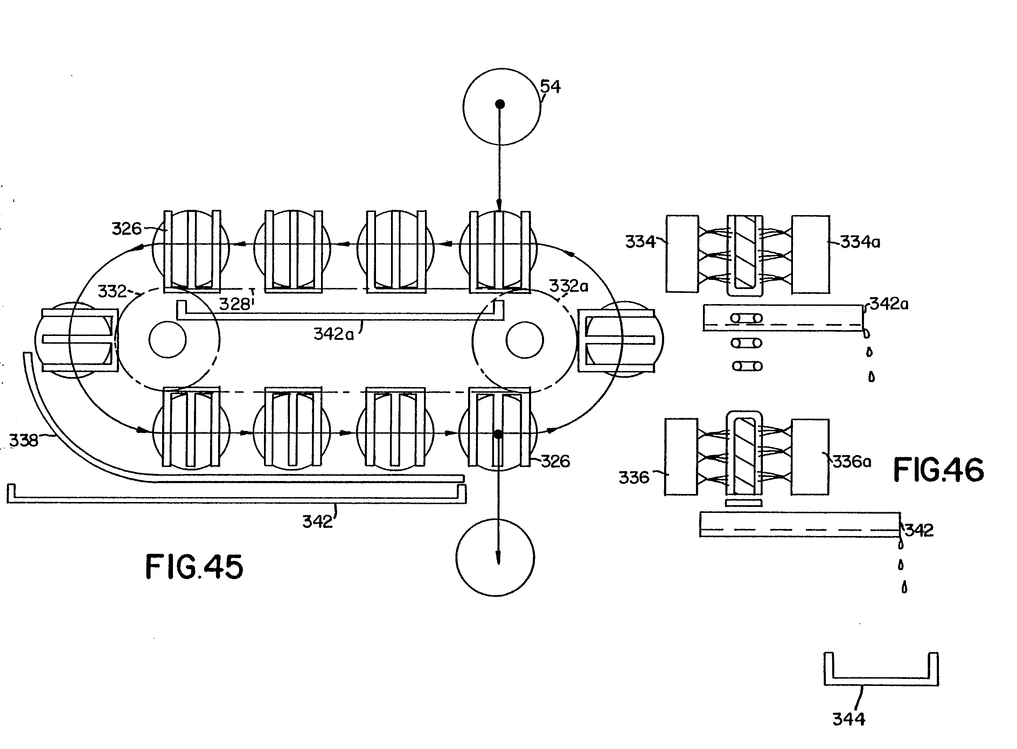

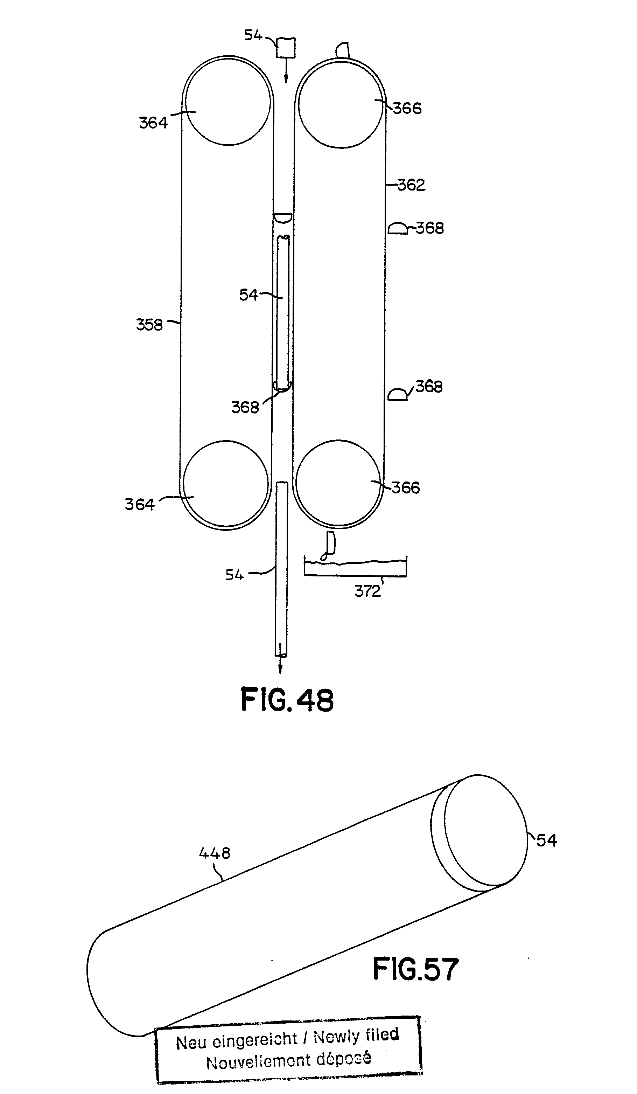

An in-line broiling system is shown in Figures 45 and 46. A series of generally U-shaped wire cages 326 are supported on an endless chain 328 that passes over two drive rollers 332 and 332a. During the counter-clockwise movement of the cages along the upper broiling level, the open face of the cages is directed upwardly. Hamburger patties 54 are dropped into the cages 332 as indicated in Figure 45. The patties travel along the closed path between segmented burners 334 and 334a (Figure 46) during the upper travel and between burners 336 and 336a on the travel at the lower level. During the travel on the lower section of the chain 332, the hamburgers are retained in the cages 326 by a support bar 338. Grease released during broiling is collected by channels 342 and 342a which drain into a collection tray 344 (Figure 46). At the conclusion of the lower excursion, the patties pass beyond the end of the support bar 338 and drop from the cage 326 for positioning on the bun. The degree of cooking of the hamburgers is under the control of the computer 4 which varies the intensity of the burners 334, 334a, 336, and 336a to synchronise the flame intensity for each hamburger. If desired, the burners may be divided into additional segments, each controlled by the computer in accordance with the input instructions.

Figure 47 shows a pair of endless wire grid belts 346 and 346a that pass over drive rollers 348. The wire belts press against the hamburger patties to retain them them while the belts convey the hamburgers upwardly along a steep incline. An array of gas burners 352, or other heat source, on the upper side of the hamburger path provides heat for the upper sides of the patties. On the lower side, a number of laterally displaced arrays of gas burners, as at 352a and 352b, provide heat for the under sides of the patties. The offset arrangement of the burners prevents grease from the hamburgers from dripping on the burners. The grease is collected by a series of channels 354 that drain into a collection tray 356.

A broiler in which the hamburger patties move downward along a vertical path is shown in Figure 48. Two wire conveyor belts 358 and 362, having spaced cross-wires, pass respectively over drive rollers 364 and 366. The belt 362 carries spaced support and grease-collection channels. When a channel 368 begins its downward movement between the belts 358 and 362, which are spaced apart by a distance slightly greater than the thickness of a hamburger patty, a patty is dropped into the cooking area and rests on one of the channels 368. When the channel moves from its linear path to go around the lower roller 366, the hamburger is released to drop into an appropriate mechanism for placing the patty on a bun. The grease then drains from the channel into a collection tray 372. As previously described, the two sides of the hamburger are heated by a suitable heat source (not shown).

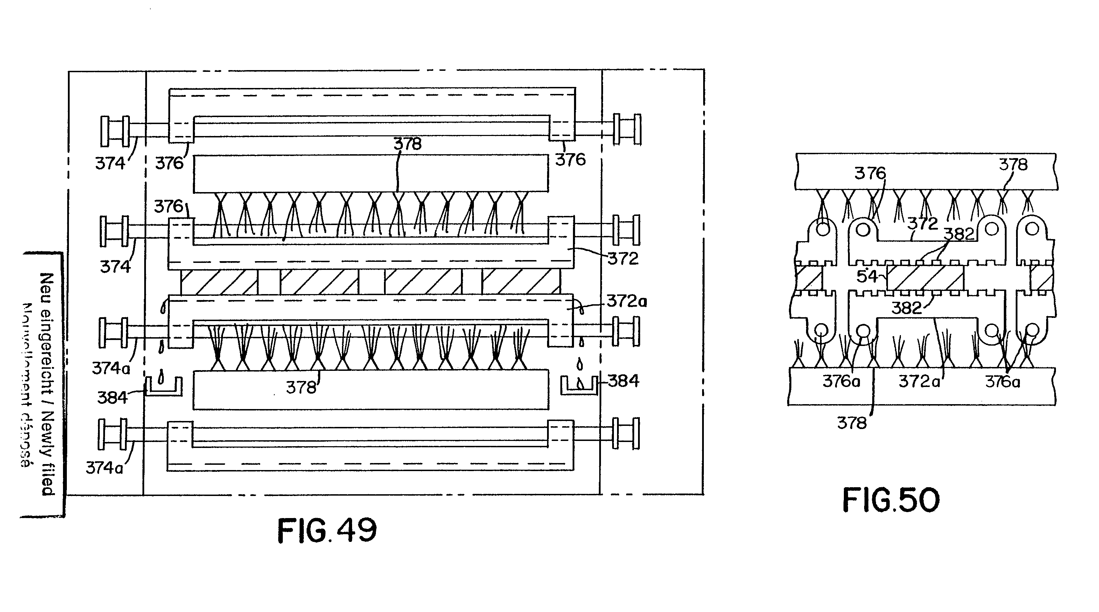

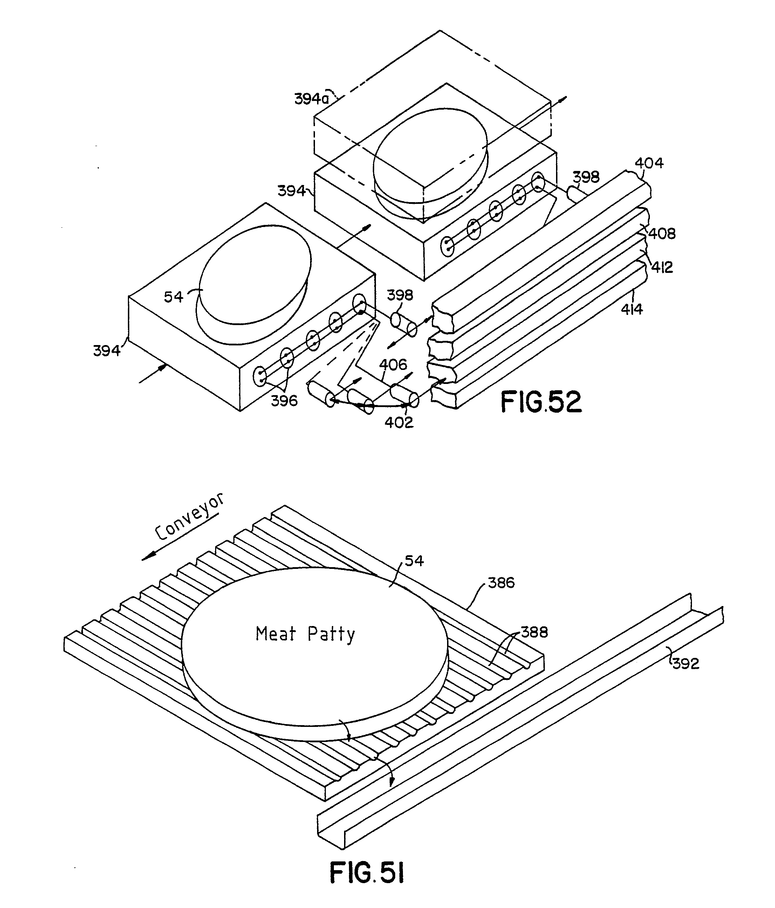

Figures 49 and 50 illustrate a system in which the hamburger patties are retained in contact with opposing heated ceramic carriers 372 and 372a. The carriers are transported by an endless conveyor system (not shown) that has a number of transverse rods 374 and 374a extending through support openings 376 and 376a in the ceramic carriers 372 and 372a. The sides of the ceramic carriers facing away from the meat patties are heated by suitable arrays of gas jets 378. The conveyor system transports the heated ceramic carriers 372 and 372a along a horizontal path where the hamburgers are cooked. Each ceramic carrier has spaced rows of grooves 382, extending perpendicular to the direction of motion of the carriers, that provide the desired grill marks in the broiled patty. In addition, the grooves in the lower ceramic carriers serve to drain off the cooking grease into a collection system indicated diagrammatically at 384. At the end of the horizontal cooking path, the ceramic carriers are separated by the conveyor system to free the hamburgers for transport to a bun and return the ceramic carriers to the entrance of the broiling area where they receive a new row of hamburger patties. The supports and drive mechanism for the ceramic carriers are located entirely outside the heated area to permit high-temperature cleaning of the broiler.

An arrangement in which a single ceramic tile 386 carries only a single hamburger patty is shown in Figure 51. In this system, the ceramic tile 386 is either pre-heated or is heated continuously while it travels through the broiler region. A series of tiles 386 are transported by any suitable conveyor mechanism, such as have already been described. A second tile (not shown) is placed on top of the hamburger patty. Both tiles have grooves 388 to form grill marks on the patty and the grooves in the lower tile also carry the grease to a collection gutter 392 that extends parallel with the path of the tile 386.

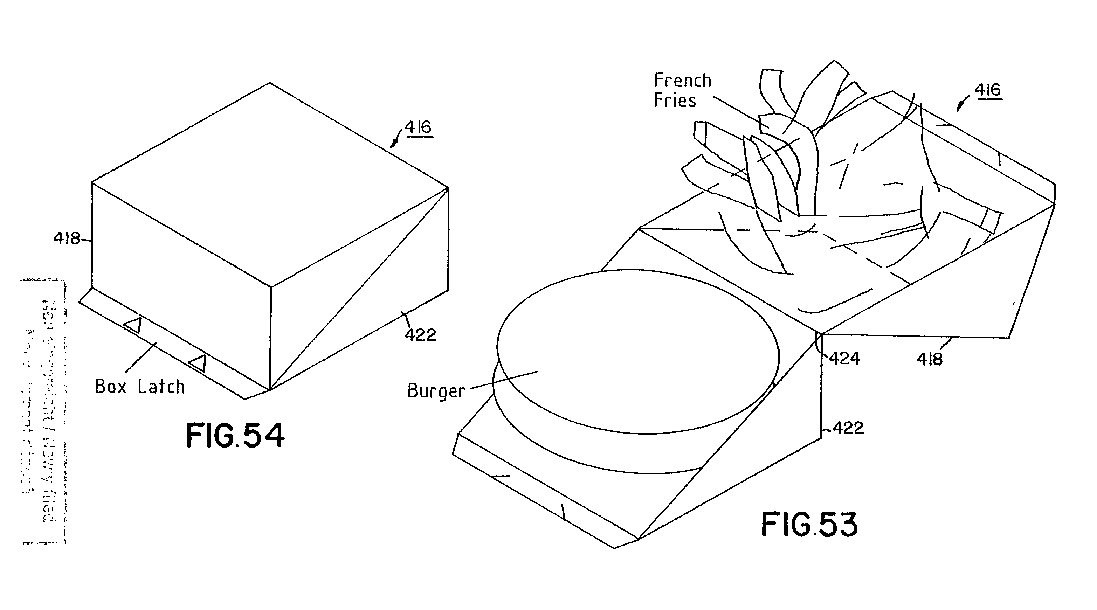

Individual control of the cooking temperature may be provided, as shown in Figure 52, by electrically heated cooking blocks 394 and 394a, which may be ceramic. Electrical heating elements 396 are embedded in each cooking block. A hamburger patty 54 is placed between the two blocks 394 and 394a which are then moved horizontally along a broiling path by any suitable transport mechanism. In order to supply electrical current to the heating elements, the elements are connected to a pair of laterally extending contact brushes 398 and 402. The common brush 398 is arranged to make sliding contact with an electrical rail 404. The variable voltage brush 402 is mounted on an arm 406, or other suitable structure, which enables the brush 402 to be adjusted to any of three positions to make sliding contact with one of three electrical supply rails 408, 412, or 414. If the arm 406 is adjusted so that contact is made between the brush 402 and the rail 408, minimum voltage is applied to the heating elements 396 and the corresponding hamburger patty will receive minimum cooking. Greater cooking is provided by connecting the brush 402 to the electrical supply rail 412 which carries a higher voltage. Maximum cooking is provided by adjusting the arm 406 to make connection between the highest voltage rail 414 and the brush 402. The tiles 394a are provided with similar heating elements and may use the same or different supply rails.

Specially designed hamburger sandwich cartons are advantageous in automatic processing systems such as those described here and can also have practical advantages in customer use. Figure 53 and 54 show a carton, generally indicated at 116. The carton is formed from a single piece of suitable material and has a triangular shaped top portion 418 and a bottom portion 422 with a complimentary triangular shape. The box is opened along a hinge line 424. When the box is closed, each cross section is rectangular providing maximum efficiency and convenience in storage and handling. When opened, the lid serves as a convenient container for auxiliary food items such as french frys.

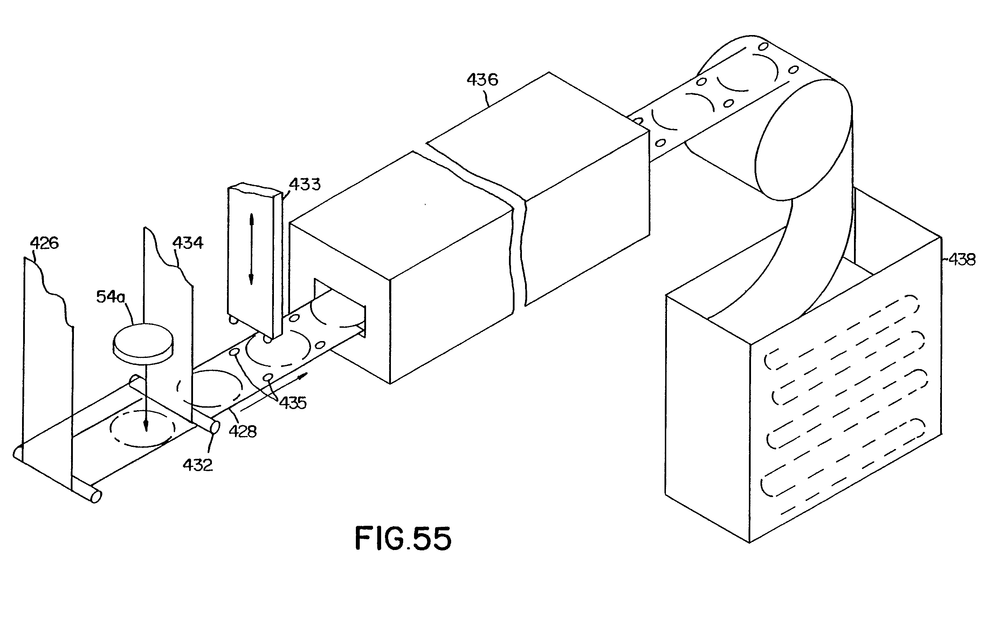

Sanitation is an important element in food processing and serving. The systems described here have the marked advantage that the hamburger sandwiches can be prepared, custom cooked, and provided with selected condiments without contact with human hands at any point. However, frozen hamburger patties may be subjected to handling in formation, transport or loading into the retail processing system. Figure 55 illustrates a system for packing the hamburger patties that increases the sanitation standards and also provides advantages in machine handling. The fresh, shaped patties 54a are placed on a strip 426 of plastic sheet. The hamburger patty is then carried by a conveyor belt 428 under a roller 432 around which passes a second strip 434 of plastic sheet. The two plastic strips are then sealed together by a heat seal 433 which seals the plastic at the points 435. An alternative sealing method places the dots in an arcuate formation nearer the patty so that, by stretching or deforming the plastic, the patties may be removed without breaking the heat seals. The hamburger patty is thus packaged between the two plastic sheets. The plastic strips containing the patties are then passed through a freezer 436 and packed in a festoon manner in a shipping carton 438.

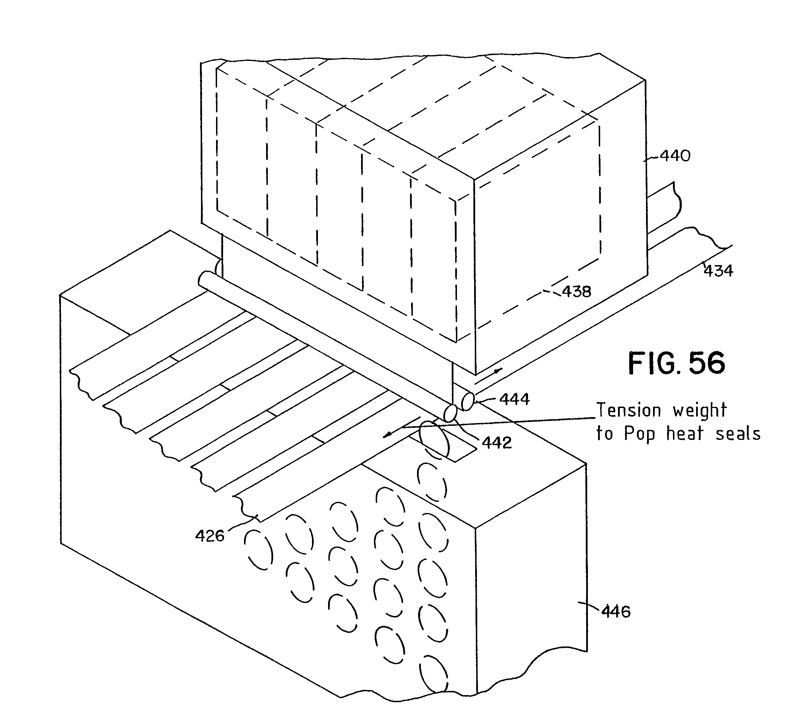

At the retail food establishment (Figure 56), the cartons 438 of hamburger patties are placed in a storage freezer 440. As hamburger patties are required, the composite strip containing the patties is automatically withdrawn from one of the cartons 438 and passed between two rollers 442 and 444. Immediately after passing between these rollers, one strip 426 of plastic is drawn away at a right angle, rupturing the heat seal, to the previous direction of travel. The other strip 434 is drawn in the opposite direction. The strips thus separating free the enclosed patty to allow it to drop into a vertical broiler 446. The freezer 440 may contain any desired number of shipping cartons necessary to meet the requirements of the broiler 446.

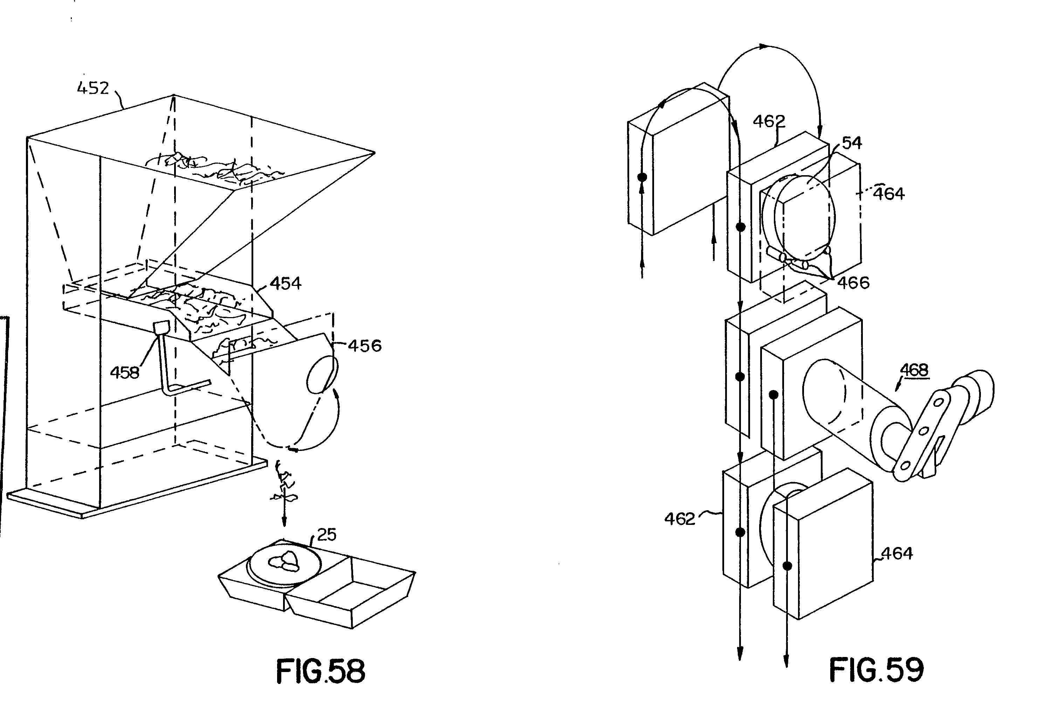

An alternative method of treating the hamburger for shipment to the retail establishment is illustrated in Figure 57. The ground meat is formed into a meat log 448 having the same diameter as the desired hamburger patties. The meat is packaged and shipped in this form. At the retail hamburger processor, an automatic meat saw mechanism cuts the individual patties from the meat log as required.

Another system for measuring and dispensing a shredded food product, such as lettuce, is shown in Figure 58. The lettuce is contained in a hopper 452 which feeds into a vibratory feeder 454. The vibratory feeder drops the shredded lettuce into a pivoted funnel 456 that is balance by a counter weight 458. When the weight of the lettuce in the funnel 456 equals the desired portion, the counter weight 458 is overbalanced and the funnel 456 tips forwardly to empty its contents on the bun crown 25.

Figure 59 shows a method for grilling patties in which the degree of doneness is controlled by varying the pressure between the hot grilling surfaces and the patty. A meat patty 54 is sandwiched between two heated conveyor blocks 462 and 464, which may be formed of ceramic or other suitable material. The patty is supported by interlocking pins 466 on each of the blocks 462 and 464. The front block 464 is spring loaded toward the block 462 to create pressure on the patty.

After a period of time depending upon the degree of doneness required, the pressure of the block 464 is removed by operation of a cam and roller latch back mechanism, generally indicated at 468. The meat patty does not cook further but is kept warm by the adjacent blocks. The patty, released from the pressure, is maintained in position by the pins 466.

Figure 55 shows an arrangement for feeding meat patties that are sealed between two strips of plastic, as described in connection with Figure 55, into a broiler or grill. The meat patties are packed in festoon fashion in a shipping carton 472. The patties 54 are sealed between the two plastic strips at points adjacent the center line of the strips and arranged such that by a slight stretching or distortion of the plastic, the frozen patties can be forced from the plastic by coin-type pushers 474a, 474b and 474c. The patties are then allowed to drop into, or otherwise be conveyed to a broiler 476 of a type already described herein.

## Claims

1. A sandwich processing and delivery system comprising order entry means,
   a computer,
   means responsive to said order entry means for entering data into said computer,
   means under the control of said computer for storing and dispensing sandwich bread,
   conveyor means for moving said sandwich bread along a predetermined path,
   means under the control of said computer for storing and dispensing a plurality of condiments to said sandwich bread at predetermined points along said path, and

means under the control of said computer for storing, cooking and dispensing meant products to said sandwich bread at a predetermined point along said path.

2. A sandwich processing and delivery system as claimed in Claim 1 including

means for assembling said sandwich bread, condiment and meat product into a sandwich.

3. A sandwich processing and delivery system as claimed in Claim 2 including

a plurality of order entry means for feeding data into said computer, and

conveyor means under the control of said computer for delivering said sandwiches to a pre-designated area as a function of the order entry data fed into said computer from said order entry means.

4. A sandwich processing and delivery system as claimed in Claim 2 wherein

said sandwich bread is a roll having crown and heel portions.

5. A sandwich processing and delivery system as claimed in Claim 4 wherein

said condiment and said meat product are dispensed onto said crown of said roll, and including

means for completing said sandwich by placing the heel portion on said crown assembly

6. A sandwich processing and delivery system as claimed in Claim 5 including

means for toasting said crown prior to dispensing to said conveyor means.

7. A sandwich processing and delivery system as claimed in Claim 6 including

means for microwave heating of said crown prior to toasting.

8. A sandwich processing and delivery system as claimed in Claim 1 including

means for storing and dispensing sandwich cartons and wherein

said sandwich bread is dispensed into said carton and said carton is moved by said conveyor means along said path.

9. A sandwich processing and delivery system as claimed in Claim 8 including

means for printing order data on said carton.

10. The method of preparing meat sandwiches comprising the steps of

entering customer order data into a computer, and under the control of said computer:

toasting first and second bun portions,

transporting said first bun portion to a first station,

placing a condiment on said first bun portion, cooking a meat product,

placing said cooked meat product on said first bun portion,

placing said second bun portion on said first bun portion, and

delivering said sandwich to a predesignated area in accordance with order data fed into said computer.

11. The method of preparing meat sandwiches as claimed in Claim 10 including the additional step of

controlling the cooking temperature during the cooking of said meat product in accordance with individual order instructions delivered to said computer.

12. The method of preparing meat sandwiches as claimed in Claim 10 including the additional step of

individually controlling the cooking time of each meat product in accordance with individual order instructions delivered to said computer.

13. The method of preparing meat sandwiches as claimed in Claim 10 wherein said step of cooking said meat product includes the additional steps of

heating opposing surfaces,

placing said meat product between said surfaces, and

pressing said surfaces against said meat product.

14. The method of preparing meat sandwiches as claimed in Claim 10 wherein

said meat product is a hamburger patty.

15. The method of preparing meat sandwiches as claimed in Claim 14 wherein said step of cooking said meat product includes the steps of

placing said patty between opposing wire grid belts, and

transporting said patty along a predetermined path through a broiling area.

16. The method of preparing meat sandwiches as claimed in claim 14 including the additional steps of

preparing said patty for cooking by securing said patty between two plastic strips, and

separating said strips to release said patty for cooking.

17. The method of preparing meat sandwiches as claimed in Claim 14 wherein

said path through said broiling area is at an angle to the horizontal and the vertical.

18. The method of preparing meat sandwiches as claimed in Claim 14 including the additional steps of

storing said bread product in a carriage having a plurality of magazines,

rotating said carriage to bring a preselected magazine to an exit position under the control of said computer, and

releasing said bred product from said magazine.

19. The method of preparing meat sandwiches as claimed in Claim 14 wherein

said bread product is a bun having separate crown and heel portions and including the additional steps of

storing said crown in a first movable magazine and dispensing said crown under the control of said computer, and

storing said heel in a second movable magazine and dispensing said crown under the control of said computer.

20. A sandwich processing and delivery system comprising

a plurality of order entry means,

computer means,

means responsive to said order entry means for entering order data into said computer means,

conveyor means under the control of said computer means and having a plurality of stations,

a supply of bread rolls having first and second portions,

first storage means for storing a supply of said first portions of said bread rolls,

second storage means for storing a supply of said second portions of said bread rolls,

means under the control of said computer means for dispensing said first portions of said bread rolls onto said conveyor means, and

means under the control of said computer for storing, cooking and dispensing meat products onto said first portion of said bread rolls.

21. The sandwich processing and delivery system as claimed in Claim 20 wherein

said means for dispensing said first portions of said bread rolls includes

a plurality of storage magazines,

means for selectively moving said magazines into a dispensing position,

a toaster, and

means for removing said first portions successively from said magazine and delivering it to said toaster.

22. The sandwich processing and delivery system as claimed in Claim 21 including

means for delivering sandwich cartons to a predetermined station of said conveyor means, and wherein

said means for dispensing said first portions of bread rolls includes means for delivering each of them to one of said cartons.

23. The sandwich processing and delivery system as claimed in Claim 20 including

means under the control of said computer means for storing and dispensing a condiment onto said first portion of said bread roll at a predetermined station of said conveyor.

24. The sandwich processing and delivery system as claimed in Claim 23 wherein said means for dispensing a condiment includes

a storage chamber for said condiment,

a receptacle having a porous bottom,

pump means for transferring a predetermined amount of said condiment from said storage chamber to said receptacle, and

means for spreading and forcing said condiment through said porous bottom onto said first portion of said bread roll.

25. The sandwich processing and delivery system as claimed in Claim 24 including

a second storage chamber for a second condiment,

a second receptacle having a porous bottom,

second pump means for transferring a predetermined amount of said second condiment to said second receptacle,

means for moving said second receptacle to place it over said first portion of said bread roll at said predetermined station, and

means for spreading and forcing said second condiment through said porous bottom and onto said first portion of said bread roll.

26. The sandwich processing and delivery system as claimed in Claim 25 including

rotatable turret means supporting both of said receptacles for selectively placing one of said receptacles over said first portion of said bread roll.

27. The sandwich processing and delivery system as claimed in Claim 24 wherein

said means for spreading and forcing said condiment through said porous surface includes a flexible wiper blade.

28. The sandwich processing and delivery system as claimed in Claim 24 wherein

said porous bottom is a screen.

29. The sandwich processing and delivery system as claimed in Claim 24 wherein

said pump means includes a stepping motor.

30. A sandwich processing and delivery system as claimed in Claim 20 including

means for dispensing a plurality of condiments onto said bread roll portion at a predetermined station of said conveyor means including

first and second storage chambers for first and second condiments,

first and second dispensing nozzles,

flexible conduit means connecting said first and second nozzles respectively with said first and second storage chambers,

pump means for transferring said condiments from said chambers to said nozzles, and

means for moving said nozzles along a predetermined path while said condiment is being is being dispensed onto said bread roll.

31. A sandwich processing and delivery system as claimed in Claim 20 including

means for dispensing a condiment onto said bread roll portion at a predetermined station of said conveyor means including

a first radially extending arm having a plurality of spaced dispensing vents,

a second radially extending arm having a downwardly extending spreader blade,

means for rotating said arms, and

means for supplying said first arm with a condiment while said arms are rotating.

32. A sandwich processing and delivery system as claimed in Claim 31 including

a third radially extending arm having spaced dispensing vents, and

second means for supplying said arm with a second condiment while said arms are rotating.

33. A sandwich processing and delivery system as claimed in Claim 20 including

means for dispensing a chopped vegetable onto said roll portion at a predetermined station of said conveyer means including

a hopper for holding said vegetable and having a slidably mounted bottom cup,

means for sliding said cup from said hopper and simultaneously closing the bottom of said hopper, and

means for opening the bottom of said cup to release said vegetable onto said roll.

34. A sandwich processing and delivery system as claimed in Claim 20 including

means for dispensing a chopped vegetable onto said roll portion at a predetermined station of said conveyor means including

a hopper for holding said vegetable and,

bucket conveyor means for removing a predetermined quantity of said vegetable and delivering it to said vegetable.

35. A sandwich processing and delivery system as claimed in Claim 20 including

means for dispensing a chopped vegetable onto said roll portion at a predetermined station of said conveyor means including

a second conveyor means,

a plurality of cups carried by said second conveyor means,

means for transferring portions of said vegetable to said cups,

doctor blade means engaging the tops of said cups to remove excess quantities of said vegetables, and

means for emptying said cups onto said roll portions.

36. A sandwich processing and delivery system as claimed in Claim 20 including

a bin for storing a quantity of cut vegetable, vacuum pick-up means including

an inverted cup, and

vacuum pump means connected to the closed end of said cup,

means for moving said cup in inverted position to engage and load a portion of said vegetable into said cup,

doctor blade means for removing excess quantity of vegetable from said cup, and

means for disabling said vacuum pump means to release said vegetable onto said roll portion.

37. A sandwich processing and delivery system as claimed in Claim 20 including

an auger feeder,

supply hopper means containing said vegetable and feeding it into said auger feeder,

a stepping motor under the control of said computer means for turning said auger feeder a predetermined selective amount to deliver a quantity of vegetable in accordance with the data fed into said computer means from said order entry means, and

means for delivering said vegetable from said auger feed to said roll.

38. A sandwich processing and delivery system as claimed in Claim 20 wherein

said meat product is a hamburger patty and including

means for dispensing predetermined quantities of bacon onto said patty comprising

a magazine,

a pre-formed flexible festoon formed of a series of pleats and positioned in said magazine,

a plurality of bacon portions each positioned on one of said pleats, and

means for successively withdrawing said pleats from said magazine and releasing said portions onto said rolls.

39. A sandwich processing and delivery system as claimed in Claim 20 including

means for dispensing pickle slices onto one of said rolls at a predetermined one of said stations of said conveyor means including

a magazine positioned over said roll,

a plurality of pickles within said magazine,

a knife cooperating with the bottom of said magazine, and

means for moving said knife across said bottom to form and remove a slice of pickle and allow it to drop on said roll.

40. A sandwich processing and delivery system as claimed in Claim 20 wherein

said meat product is a hamburger patty and including

a chamber for storing patties comprising

a plurality of separate magazines,

means for moving said chamber to position a selected one of said magazines at an exit position, and

pusher means for pushing one of said patties from said selected magazine.

41. A sandwich processing and delivery system as claimed in Claim 40 wherein

said magazines are of different sizes to accommodate hamburger patties of different diameters.

42. A sandwich processing and delivery system as claimed in Claim 20 wherein

said meat product is a hamburger patty and including

a second conveyer means for receiving patties from said storage and dispensing means,

means for supporting said patties in spaced positions on said second conveyor means, and

means on each side of said second conveyor means for applying heat to said patties.

43. A sandwich processing and delivery system as claimed in Claim 42 wherein

said second conveyor means extends at an angle form the vertical and horizontal.

44. A sandwich processing and delivery system as claimed in Claim 42 wherein

said second conveyor means comprises a wire mesh belt having spaced horizontal wires engaging said patties.

45. A sandwich processing and delivery system as claimed in Claim 44 including

a defined broiling area around said hamburger patties, and wherein

said second conveyor means includes drive means and support means positioned outside said broiling area.

46. A sandwich processing and delivery system as claimed in Claim 20 wherein

said meat product is a hamburger patty and including

a second conveyor means for receiving patties from said storage and dispensing means and transporting them along a cooking path,

first and second heating means positioned on opposite sides of of said second conveyor means, and

movable vanes positioned between said elements and said hamburgers patties to regulate the degree of cooking.

47. A sandwich processing and delivery system as claimed in Claim 46 including

magnetic means under the control of said computer for adjusting said vanes in accordance with order data fed into said computer.

48. A sandwich processing and delivery system as claimed in Claim 20 wherein

said meat product is a hamburger patty and in which

said means for cooking, storing and dispensing said hamburger patty includes

a second conveyor means for transporting said hamburger patty through the cooking area,

a plurality of arrays of heating elements at spaced positions along said second conveyor means, and

means for independently adjusting adjusting the intensity of said arrays in accordance with the order data fed into said computer means with respect to each hamburger patty.

49. A sandwich processing and delivery system as claimed in Claim 20 wherein

said meat product is a plurality of hamburger patties, and including

a pair of endless horizontally moving wire grid belts having vertical cross wires supporting multiple horizontal rows of said hamburger patties, and

a plurality of grease collecting channels each positioned beneath one of said rows of hamburger patties.

50. A sandwich processing and delivery system as claimed in Claim 20 wherein

said meat product is a plurality of meat patties, and including

a plurality of vertically spaced horizontally-moving wire grid belts, each of said belts supporting a horizontal row of said patties, and a plurality of grease-collecting channels each positioned beneath one of said belts.

51. A sandwich processing and delivery system as claimed in Claim 49 wherein

said belts move along paths inclined from the vertical and from the horizontal.

52. A sandwich processing and delivery system as claimed in Claim 20 wherein

said meat product is a plurality of meat patties, and including

a plurality of horizontally-moving horizontally-spaced meat patty conveyors each having a pair of wire grid belts and means for supporting said meat patties therebetween.

53. A sandwich processing and delivery system as claimed in Claim 52 wherein

said means for supporting said meat patties includes a movable support engaging the bottoms of said meat patties.

54. A sandwich processing and delivery system as claimed in Claim 53 wherein

each of said supports includes a plurality of vertically extending wires.

55. A sandwich processing and delivery system as claimed in Claim 20 wherein

said meat product is a plurality of meat patties, and including

a pair of vertically-moving wire grid belts on each side of and spaced from one of said meat patties,

support means for supporting said patties between said belts,

heating elements disposed on either side of said patties, and

means under the control of said computer means for individually releasing said support means to allow a selected one of said patties to drop from the area of said heating elements.

56. A sandwich processing and delivery system as claimed in Claim 20 wherein

said meat product is a plurality of meat patties, and including

a pair of wire mesh conveyors having staggered wire pockets,

said meat patties between said belts and supported by said pockets,

the path of said pockets while supporting said patties being inclined from the vertical.

57. A sandwich processing and delivery system as claimed in Claim 20 wherein

said meat product is a plurality of meat patties, and including

an endless conveyor,

a plurality of separate wire clamp members supported by said endless conveyor, and each carrying one of said meat patties,

heating elements positioned on each side of said meat patties,

the movement of said wire clamp members while carrying said meat patties being inclined from the horizontal, and

means for collecting meat drippings from said patties.

58. A sandwich processing and delivery system as claimed in Claim 20 wherein

said meat product is a plurality of meat patties, and including

second endless vertically-positioned conveyor means having spaced substantially horizontal channels for supporting said meat patties and collecting grease therefrom,

each of said channels having a plurality of spaced grid members extending parallel with the direction of movement of said second conveyor means to hold said patties in position during the cooking process, and

drive means for said conveyor means to move said channels vertically.

59. A sandwich processing and delivery system as claimed in Claim 20 wherein

said meat product is a plurality of meat patties, and including

a second endless conveyor means following a closed path in a substantially vertical plane,

a plurality of individual spaced wire grid carriers each having an open end section and being supported by said second conveyor means for transporting said patties during cooking, and

a support member positioned beneath said second conveyor means to prevent said patties from dropping from said carriers when said open sections are facing downward.

60. A sandwich processing and delivery system as claimed in Claim 20 wherein

said meat product is a plurality of meat patties, and including

first and second endless wire grid belts carrying therebetween a plurality of said patties, the path of said patties being inclined from the vertical, and

upper and lower heating positioned on opposite sides of said patties,

said lower heating means comprising a plurality of independent offset heating elements each having a grease-collecting channel whereby grease from said patties does not drip on the elements.

61. A sandwich processing and delivery system as claimed in Claim 20 wherein

said meat product is a plurality of meat patties, and including

first and second endless wire grid belts having adjacent spaced sections moving in a substantially vertical direction, and

a plurality of spaced substantially horizontal patty-supporting and grease-collecting channels secured to said first belt.

62. A sandwich processing and delivery system as claimed in Claim 20 wherein

said meat product is a plurality of meat patties, and including

second and third endless conveyor belts,

first and second sets of heat-resistant ceramic patty carriers supported respectively by said second and third conveyor belts, said carriers having an operating region wherein said carriers are in spaced face-to-face relationship,

a meat patty positioned between and in contact with said carriers, and

means for applying heat to said carriers to cook said meat patty.

63. A sandwich processing and delivery system as claimed in Claim 62 including

means under the control of said computer means to adjust the pressure between said carriers and said patty thereby to affect the heat transfer in accordance with order data fed into said computer.

64. A sandwich processing and delivery system as claimed in Claim 62 wherein

the opposing faces of said carriers are grooved.

65. A sandwich processing and delivery system as claimed in Claim 20 wherein

said meat product is a plurality of meat patties, and including

first and second cooking blocks in face-to-face relationship with a meat patty therebetween,

means for moving said blocks along a predetermined path,

electrical heating elements in each of said blocks, and

means for applying electrical energy to said blocks during movement along said path.

66. A sandwich processing and delivery system as claimed in Claim 65 including

means for adjusting the electrical energy applied to said blocks in accordance with order data fed to said computer means.

67. A sandwich processing and delivery system as claimed in Claim 20 including

a dispenser for a shredded food product including

storage means for said product,

a pivotally mounted receptacle having an output port,

vibratory feeder means for transporting said product from said storage means to said receptacle, and

counterweight means for pivoting said receptacle when a predetermined amount of product has been transferred thereto and cause said product to exit through said port.

68. In an automatic food processing system the method of forming patties comprising the steps of

forming ground meat into a cylindrical loaf,

freezing said loaf,

placing said loaf into a dispenser, and

under the control of a computer:

moving said log to a selected dispensing position, and

cutting a slice from said loaf to form a meat patty.

69. In an automatic food processing system, a carton for holding a sandwich comprising

top and bottom portions formed from a single piece of bendable material,

said portions each having a triangular cross section and being of approximately equal capacity, and

hinge means connecting said portions.

70. The method of packing meat patties for shipment and storage comprising the steps of

forming fresh meat patties,

placing said patties in spaced positions between two strips of flexible material, and

sealing said strips together at a point between each pair of patties.

71. The method as claimed in Claim 70 wherein

said strips are plastic and said sealing is the result of the application of heat and pressure.

FIG.I

64

22

46

Freezer

54

66

56

58

54

36    34    32    28

18    62    25    24

67    67    26    16

8    18

**FIG.2**

EP 0 296 496 A2

15 810

Exit | Close (Out) | Heel | Patty Cheese | Pickle | Spare | Ketchup Mustard Tartare | Bacon | Onion | Tomato | Lettuce | Mayonnaise Mustard | Crowns | Spare | Box

52 →

46

48

23

## FIG.3

EP 0 296 496 A2

15 810

Shredded Lettuce(Onion) Dispenser

FIG.14

148
148
146
152
144
25
18
26

FIG.4

62

18  To
Drius-In
14

EP 0 296 496 A2

15 810

Rolls packed in
individual Plastic sleeves

68

68

70

## FIG.5

72

## FIG.6

EP 0 296 496 A2

FIG.7

EP 0 296 496 A2

15 810

FIG. 8

EP 0 296 496 A2

104a

104

102

84a

84

28

86

98

96

88a

88 94

94a

Dispensed
Product

FIG.9

92a

92 15

15 810

Diced Product

FIG.17

168

178

172

182

To Sandwich

122a

122

122b

106

106a

108

106b

108a

108b

114

116

FIG.IO

112

112b

112a

118

Mayonnaise   Mustard   124

132   128a

126   128

25

132

FIG. II

EP 0 296 496 A2

15  810

**FIG.12**

**FIG.13**

**FIG.15**

Crown → 25

**FIG.16**

Neu eingereicht / Newly filed
Nouvellement déposé

Bacon filled
into
Plastic
Festoon
after
Microwave
Warming

186

182

184

192

184

188

FIG.18

# FIG.19

# FIG.20 4.Up Pickle Slicer

15 810

Bottom
Unload

207

48a

48

48a

46

48

48

Other
Unload
Positions

206

48

204

48

Magazine
Shifting

48

Insulated
Freezer
Wall

48a

48a

48

FIG.21

FIG.22

FIG. 26

Rare Burger

Well-done
Burger

232

232

222b

228b

Venetian blinds

222c

Compressor

Freezer
Compartment

Meat Patty
Stacks
1½ HR.Capacity

46

Rotary
Actuator
or Gate Drops
Patties into
Top of
Broiler

Bottom of
Stack Coin
Feeder

216

214

214a

212

216

218

# FIG.23

EP 0 296 496 A2

Wire Grid Belt

Meat Patty can Travel
through Broiler on either
Upward or Donnward path

226     226     226a     226a

56a

228     228a     222a

226

222

226     226

226a     226a

226a

**FIG.24**

56a

230

254     54

230

**FIG.25**

15 810

FIG.27

15 810

# FIG.29

222e

228e

222d

228d

54

222d

54

224

54

224

224

# FIG.30

# FIG.28

228g

## FIG.32

228f

222f

224a

222g

224b

222h

## FIG.31

224a

## FIG.33

224b

224c

244

FIG.35

FIG.34

Two wire grid Belts carry Meat Patties through Broiler

54

247

248

246

Well Done

Med Rare

Rare

FIG.36

EP 0 296 496 A2

15 810

EP 0 296 496 A2

**FIG.37**

54

256

252

252

262

258

254

264

54

266

278

268

272

274

54

276

FIG.38

EP 0 296 496 A2

**FIG.39**

## FIG.47

## FIG.40

FIG.41

15 810

FIG.43

FIG.42

FIG.44

FIG.45

FIG.46

EP 0 296 496 A2

54

364

366

362

368

54

358

368

368

368

364

366

54

372

**FIG. 48**

448

54

**FIG. 57**

374   376   378   376

376

374   372

376   372a

374a   378   384

384   378   384

374a

**FIG.49**

EP 0 296 496 A2

376   378

372   382

54   382

376a   372a   376a

378

**FIG.50**

394a

394

394

54

398

404

408

412

414

398

406

396

402

**FIG.52**

Conveyor

54

386

388

392

Meat Patty

**FIG.51**

416

418

Box Latch

422

**FIG.54**

French
Fries

416

Burger

424

418

422

**FIG.53**

EP 0 296 496 A2

FIG.55

EP 0 296 496 A2

FIG.56

Tension weight
to Pop heat seals

FIG.58

FIG.59